# EUROPEAN PATENT SPECIFICATION

(11) **EP 3 927 459 B1**
(45) Date of publication and mention of the grant of the patent: **18.06.2025**
(21) Application number: 19706533.7
(22) Date of filing: 18.02.2019
(51) Int. Cl.: B01J 19/00, B01J 19/24, C22B 1/02, B01J 6/00, B01J 19/18

(54) **REACTOR CONTROL UNIT, REACTOR SYSTEM AND METHOD FOR CONTROLLING REACTORS**
REAKTORSTEUEREINHEIT, REAKTORSYSTEM UND VERFAHREN ZUR REGELUNG VON REAKTOREN
UNITÉ DE COMMANDE DE RÉACTEUR, SYSTÈME DE RÉACTEUR ET PROCÉDÉ POUR COMMANDER DES RÉACTEURS

(43) Date of publication of application: 29.12.2021
(73) Proprietor: Metso Metals Oy, 02230 Espoo (FI)
(72) Inventor: HAUS, Steffen, 63322 Rödermark (DE); RUNKEL, Marcus, New Orleans, Louisiana 70119 (US); KAUVOSAARI, Sakari, 71480 Kurkimäki (FI); SCHIEMANN, Robert, 63225 Langen (DE); HAMMERSCHMIDT, Jörg, 63526 Erlensee (DE)
(74) Representative: Keil & Schaafhausen Patentanwälte PartGmbB
(86) International application number: PCT/EP2019/053949
(87) International publication number: WO 2020/169171

(56) References cited:
- EP-A1- 2 481 477
- WO-A1-2018/025201
- RU-C1- 2 223 284
- US-A1- 2007 078 238
- US-A1- 2007 104 641
- US-A1- 2011 014 718
- US-A1- 2014 017 133
- US-B1- 6 489 168

## Description

The invention relates to a reactor control unit for controlling a plurality of parallel reactors each being fed with at least one reactant with a time depending feed rate, wherein the control unit is configured to communicate at least one control variable to the plurality of reactors, in particular to communicate a set of control variables to each of the plurality of reactors. The invention further relates to a reactor system comprising a plurality of parallel reactors and a control unit for controlling the plurality of parallel reactors as well as a method for controlling a plurality of parallel reactors.

US 2014/0017133 A1 discloses an ozone gas supply system with several nitro-gen-free ozone generation units. Each generation unit comprises a nitro-gen-free ozone generator and an ozone control part. In each generation unit, a raw material gas is supplied to the ozone generators through a corresponding gas flow rate controller with a constant flow rate. Process ozone gas event signals are inputted from downstream-side ozone treatment apparatuses to a system management control part and indicate ozone rates, which are requested by said ozone treatment apparatuses. The system management control part outputs nitrogen-free ozone generation unit control signals for controlling the generation units based on the process ozone gas event signals. Each of the nitrogen-free ozone generation unit control signals indicates a request ozone flow rate request ozone concentration and for the respective generation unit. Those values are determined by the system management control part based on the ozone flow rates and ozone concentrations, which are requested by the ozone treatment apparatuses by the process ozone gas event signals. Further, each ozone control part includes an event adjuster for adjusting the set flow rate based on the request ozone flow rate, which is received from the system management control part.

US 2007/0078238 A1 shows a polymerization system including two polymerization reactors in parallel configuration. Properties of a polyolefin product and a catalyst performance are controlled by adjusting amounts of components directed to a pre-contactor versus amounts of components sent directly to a polymerization reactor via a pre-contactor bypass. Means for feed and control measure and control the rates at which the components are introduced into the polymerization system. These means can be, for example, a flow meter, a pump, or a combination thereof.

According to RU 2 223 284 C3, a process of producing butyl rubber is carried out in parallel reactors using control loops consisting of charge control sensors, charge flow valves, catalysts, and temperature and concentration sensors in reactors connected to controllers. A concentration and a temperature of the charge are adjusted by the action of the valves of the control loops. A control system of several process apparatuses includes parameter control sensors connected to the controllers, and control circuits consisting of sensor controllers and valves. For interconnected process control, primary controllers and backup controllers are used.

US 2011/0014718 A1 relates to a method and device for the parallel study of chemical reactions in at least two spatially separated reaction spaces. Especially, it is pointed to reactions in which fluid flows through at least two spatially separated reaction processes, wherein the reactions are controlled together for all reaction spaces. Accordingly, the device has a common educt feed and at least one common holding gas feed for all the reaction spaces.

A continuous polymerization apparatus of EP 2 481 477 A1 comprises a first reactor and a second reactor. A raw material supply line is located so that a raw material monomer and a polymerization initiator are supplied in the form of a mixture to the reactors via respective supply ports. A flow control valve is located at a branching point, at which a common part of the raw material supply line branches into a first part and a second part, and thereby the flow rates of the mixture passing to the first reactor and the second reactor are controlled. A control unit is provided for adjusting the respective supply amounts of the raw material monomer and the polymerization initiator to the reactors with the operation of pumps for the raw material and the initiator and the flow control valve or by regulating the temperature of an outer surface of the reactors for temperature regulating jackets. The control unit directly controls the supply flow rates for the reactors.

US 2007/0104641 A1 relates to a method for controlling addition of a supplementary oxygen stream into a steam methane reformer. Several reformer tubes are within one single radiant section of the reformer and are supplied by a common combined stream.

US 6,489,168 B1 discloses a reactor control system for monitoring and controlling a parallel chemical reaction. The reactor control system sends control data to and receives experimental data from a parallel polymerization reactor. The control and experimental data includes set point values for temperature, pressure, time, stirring speed as well as measured experimental values for temperature and pressure. The reactor control system acquires experimental data in a system control module and processes it in a data analysis module under user control through a user interface module. The system control module controls a reactor vessel pressure through a pressure interface and a pressure controller. The pressure controller pressure control signals to valves allowing gases to enter or exit reactor vessels through inlet/outlet as required to maintain the reactor vessel pressure at a level set by the user through user interface. Further, the reactor control system can determine whether the reaction occurring in one or more of reactor vessels has reached a specified conversion target based on calculated results. In that case, the reactor control system causes the addition of a quenching agent to the relevant reactor vessel or vessels for terminating the reaction in that vessel.

WO 2018/025201 A1 shows a system for controlling a plant for the production in continuous of a polymer. The plant comprises a reaction section comprising at least one reactor, which is fed with at least a first monomer and a second monomer, a stripping section, comprising a first high-pressure stripper, a second low-pressure stripper and a third low-pressure stripper, a finishing section comprising at least one vat for recycling the fine products, a plurality of measurement equipment of the operating conditions of the plant, and a control system. The control system comprises a plurality of distributed control devices which can be driven by at least one central electronic processing and control unit on the basis of a plurality of control variables comprising the flowrate of oil with which the first stripper is fed, the flowrate of chain terminator with which the at least one reactor is fed, and the vent flowrate of the thermostatic control circuit of reactor. The central electronic processing and control unit comprises software means for implementing a control method. Therein, a production potential value of the reactor is determined.

Reactors, particularly fluidized bed reactors like e.g. roasting reactors, have to be controlled by adjusting a high plurality of parameters. The parameters of the reactors typically include several input material streams like feed material, air, oxygen, additional gases, water and others. The reactors also have output material streams like the product material and exhaust gases. Additionally the reactors have internal parameters like the process temperature or the composition of the various material streams, especially the output stream of the product. At least some of these parameters cannot be directly controlled and/or depend highly on other parameters of the reactor. Also, there are a number of inner boundary conditions, like a maximum or a minimum value or a specific ratio to another parameter. Control units for the adjustable parameters of a single reactor are well established

However, often a number of reactors form a combined reactor system, sharing some previous or downward system, like feeding lines. Hence, the available feed has to be shared by the reactors. The same is true for output streams, especially the exhaust gas, which is typically treated in a combined exhaust after-treatment system for all the reactors.

As it is very seldom that all reactors are operated at their maximum, it is common to undersize the supply lines and/or the exhaust system. This means, the supply lines cannot supply all reactors running at full capacity at the same time and/or the exhaust after-treatment system cannot handle the exhaust gases of all reactors running at full capacity at the same time. Therefore, besides the individual requirements the reactor has to fulfill, also global requirements exist that have to be fulfilled by the combination of the reactors. This renders the control of a reactor system comprising a plurality of reactors highly complicated and thus typically such a reactor system does not use all the available resources and does thus not work at the highest possible efficiency.

It is, therefore, the object of the present invention to improve the efficiency of reactor systems with a plurality of individual reactors.

The object is solved by a reactor control unit for controlling a plurality of parallel reactors according to claim 1.

The reactor control unit is configured to communicate at least one control variable to the reactors, wherein the at least one control variable comprises a feed target, which is a threshold value regarding the specific feed rate of the reactor. In particular, the control unit sends one corresponding feed target to every controlled reactor, wherein the reactor can adjust its own actual feed under the condition that it is smaller than the assigned feed target. The feed of the reactor is the amount of input material, put in the reactor, converted therein and output as a product. The feed is therefore more or less proportional to the throughput and the amount of material output of the reactor. The reactor typically tries to maximize its throughput and thus its feed and therefore tries to reach the assigned feed target.

The control unit comprises a total feed target, which can be a physical restriction of an apparatus arranged subsequently to the plurality of reactors or can be adjusted by a person due to a specific demand, and indicates the total desired feed, which determines the total throughput of the reactors. The total feed target is stored in the control unit as an upper boundary value. The control unit is configured to set the respective feed targets of the plurality of reactors such that the sum of the feed targets of the plurality of reactors is lower or equal to the total feed target. Further, the control unit is configured to read the actual feeds from the plurality of reactors, e.g. the feed values as adjusted by the individual reactors, for example by receiving the values from subordinate control units responsible for the individual reactors or access a corresponding memory of such a control unit. Alternatively, the control unit can have direct access to respective sensor units.

Depending on the actual feed rate and the feed target of the reactor, the control unit interprets the reactor as inquiring a higher, the same or a lower feed target. It then decreases the feed target for a reactor that inquires a lower feed target and increases the feed target for a reactor that inquires a higher feed target under the condition that the sum of the feed targets does not exceed the total feed target. Thus, the control unit shifts the several feed targets between the plurality of reactors, depending on the actual use of the reactors in order to maximize the total throughput of the system of parallel reactors. The control unit constantly repeats the steps of reading the actual feeds of the reactors and comparing them to the feed targets, determining which reactors inquire a higher and/or lower threshold and increasing and/or decreasing the respective thresholds, when possible. The steps can be repeated by the control unit as fast as possible or with a predetermined periodicity.

According to a preferred embodiment, the control unit is configured to calculate a difference between the feed target and the actual feed of each reactor, which is adjusted by the reactor itself. When the calculated difference is larger than a first difference stored in the control unit as a first feed-delta, the reactor seems not to be able to reach the assigned target value. The control unit interprets this as the reactor inquiring for a lower feed target. When the reactor actually reaches its target value or nearly reaches its target value, the difference between the feed target and the feed is smaller than a second feed-delta. The second feed delta can be chosen in the order of magnitude of normal fluctuations of the feed and is thus much smaller than the first feed-delta. The control unit interprets this as the reactor inquiring for higher feed target. Hence, the control unit shifts the target feed from a reactor that was not able to reach its target value to a reactor, which seems to be able to reach an even higher feed. This results in a higher total feed and, thus, in an increased overall throughput.

According to an alternative embodiment, one of the control variables is a lower threshold value regarding the feed of the reactor. The control unit thus sends the feed target as a higher threshold and additionally a lower threshold to the reactor. The reactor has therefore an upper and a lower boundary within which it can adjust its feed. The control unit is configured to calculate a difference between the lower threshold value and the actual feed of each reactor and interpret the reactor as inquiring for lower feed target when a difference between the feed and the lower threshold value regarding the feed of the reactor is smaller than a first feed-delta.

The control unit is further configured to calculate the difference between the feed target and the actual feed. When the feed lies near the feed target, where a difference between the feed target and the feed is smaller than a second difference stored in the control unit as a second feed-delta, the reactor is interpreted as inquiring for higher feed target. The sum of the first and second feed-delta can be smaller than the difference between the feed target and the lower threshold value. Thus, the area between the upper and lower threshold is divided in three parts. An upper part, interpreted as inquiring for higher threshold, a middle part as inquiring for the same threshold and a bottom part as inquiring for a lower threshold. This two-threshold principle is described later regarding the air stream and oxygen stream in more detail and is also applicable with all its details to the feed target and the lower threshold value regarding the feed of the reactor.

According to a preferred embodiment the feed targets of the reactors that inquired a higher feed target are increased such that the sum of all feed targets equals the total feed target. Hence, the free feed target, defined as the difference between the sum of all feed targets and the total feed target, is completely distributed to the reactors that inquired a higher feed target. The control unit can decrease the feed target of the reactors that inquired a lower threshold irrespective of other reactors inquiring for a higher target. This will lead to unassigned or free target. In such a case, the sum of all feed targets is lower than the total feed target. Alternatively, the control unit can be configured to decrease the feed target of the reactors that inquired a lower threshold, only, when at least one other reactor inquires for a higher feed target.

According to a further preferred embodiment the feed targets of the reactors that inquired a higher feed target re increased evenly. Therefore, the free target is distributed evenly to the reactors that inquired a higher feed target. Hence, every reactor that inquired a higher feed target gets the same part of the freed target of a reactor that inquired a lower feed target. The reactors are therefore handled equally, preventing that one reactor has disadvantages due to its position in the control system.

According to a preferred embodiment the feed target is increased and/or decreased by a fixed step and/or rate. The control unit can comprise a predetermined decrease step for a reactor. The decrease step can be the same or an individual decrease step for every reactor. When the target feed of a reactor that inquired a lower feed target is decreased, the target feed is decreased by this specific step. Likewise, the control unit can comprise a predetermined increase step for a reactor. The increase step can also be the same or an individual increase step for every reactor. When the target feed of a reactor that inquired a higher feed target is increased, the target feed is increased by this specific step. When the free target is not sufficient to increase the feed target of all reactors that inquired a higher feed target by the predetermined step, the control unit can increase the feed target of as many reactors as possible. Alternatively, the feed target of all reactors that inquired a higher feed target can be increased by a reduced step, such that the free feed target is distributed completely. It is also possible to increase and decrease the feed target by a specific rate, meaning by a predetermined value per unit of time. Thereby the speed with which the feed target values change does not depend on the control units calculating power, which affects the repetition rate with which the control unit checks the reactors and sends new feed targets to the reactors. In the same way as above, the control unit can comprise an increase and/or a decrease rate for every individual reactor or a global increase and/or decrease rate for all reactors.

According to a preferred embodiment of the invention, the control unit comprises a maximum feed for at least one of the plurality of reactors, wherein the control unit is configured to set the feed target of the reactor lower than the maximum feed of the reactor. Hence, the control unit knows the maximum feed values of the plurality of the reactors and sets the feed target accordingly such that it does not exceed the maximum feed of the reactor. Additionally the reactor can be configured to not accept an increase of its feed target that would exceed its maximum feed. Alternatively, the control unit can read the maximum feed from the reactor and set the target feed accordingly, or the control unit can have no information about the maximum feed and set the target feed independently and the reactor itself sets its target value to the maximum feed when a target feed higher than the maximum feed is received.

Additionally or alternatively, the control unit can comprise a minimum feed for at least one of the plurality of reactors, wherein the control unit is configured to set the feed target of the reactor higher than the minimum feed of the reactor. Hence, the control unit knows the minimum feed values of the plurality of reactors and sets the feed target accordingly such that it does not fall below the minimum feed target. Additionally, the reactor can be configured to not accept a decrease of its feed target that would fall below its minimum feed. Alternatively, the control unit can read the minimum feed from the reactor and set the target feed accordingly, or the control unit can have no information about the minimum feed and set the target feed independently and the reactor itself sets its target value to the minimum feed when a target feed lower than the minimum feed is received.

According to a preferred embodiment, the at least one control variable comprises a lower and a higher air stream threshold. Hence, the control unit sends a pair of corresponding air stream thresholds preferably to every controlled reactor, wherein the reactor can adjust its own actual air stream under the condition that it stays within the received thresholds. The control unit comprises a total air stream value, wherein the sum of the higher air stream thresholds of the plurality of reactors is lower or equal to the total air stream value. The control unit is further configured to read an actual air stream from the plurality of reactors by receiving the actual air stream values from a single reactor control unit, accessing a corresponding memory, having access to respective sensors or receiving the values in another way. The control unit then compares the actual air stream with the lower and higher air stream thresholds and interprets a difference between the higher air stream threshold and the actual air stream, which is smaller than a first air-delta as an inquiry for increase of the air stream thresholds. Furthermore, the control unit interprets a difference between the lower air stream threshold and the actual air stream, which is smaller than a second air-delta as an inquiry for a decrease of the air stream thresholds.

The sum of the first and second air-delta can be smaller than the difference between the higher air stream threshold and the lower air stream threshold. Thus, the area between the upper and lower threshold is divided in three parts. An upper part, interpreted as inquiring for higher threshold, a middle part as inquiring for the same threshold and a bottom part as inquiring for a lower threshold. Hence, when the reactor adjusts its air stream such that it lies in the upper part of the allowable field, the control unit interprets it as a request for an increase. On the other hand, when the reactor adjusts its air stream such that it lies in the lower part of the allowable field, the control unit interprets it as a request for a decrease.

The control unit then decreases the lower and/or higher air stream thresholds for a reactor that inquired a lower air stream threshold and increases the lower and/or higher air stream thresholds for a reactor that inquired a higher air stream threshold under the condition that the total air stream value is not exceeded.

According to a further preferred embodiment, the total air stream value depends on a maximum gas throughput of a joint exhaust gas after-treatment system, which is arranged after the plurality of reactors. The total air stream value can thus be a fixed value calculated once from the maximum gas throughput of the joint exhaust gas after-treatment system, for example the maximum gas throughput can be used directly or a specific percentage thereof. Alternatively, the total air stream value is further depending on an oxygen stream value of the plurality of reactors. Since the air stream and the oxygen stream both add to the total exhaust volume, the total air stream value can be constantly adapted to the varying oxygen stream. It could further be adapted based on the composition of the feed material, in particular to the percentage of components that result in larger exhaust volumes.

According to another preferred embodiment, the control unit comprises a maximum air stream for at least one of the plurality of reactors, wherein the control unit is configured to set the lower and/or higher air stream thresholds of the reactor lower than the maximum air stream of the reactor. Hence, the control unit knows every maximum air stream of the reactors and sets the air stream thresholds accordingly such that the higher air stream threshold does not exceed the maximum air stream. Additionally the reactor can be configured to not accept an increase of its air stream thresholds that would exceed its maximum air stream.

Alternatively, the control unit can read the maximum air stream from the reactor and set the air stream thresholds accordingly, or the control unit can have no information about the maximum air stream and set the air stream thresholds independently and the reactor itself sets its air stream thresholds to the highest possible values when a value with a higher air stream threshold that exceeds the maximum threshold is received.

Additionally or alternatively, the control unit can comprise a minimum air stream for at least one of the plurality of reactors, wherein lower and/or higher air stream thresholds of the reactor are set to be higher than the minimum air stream of the reactor. Hence, the control unit knows every minimum air stream of the reactors and sets the air stream thresholds accordingly such that the lower air stream threshold does not fall below the minimum air stream. Additionally, the reactor can be configured to not accept a decrease of its air stream thresholds below its minimum air stream.

Alternatively, the control unit can read the minimum air stream from the reactor and set the air stream thresholds accordingly, or the control unit can have no information about the minimum air stream and set the air stream thresholds independently and the reactor itself sets its air stream thresholds to the lowest values possible, when a lower air stream threshold lower than the minimum air stream is received.

According to a preferred embodiment of the invention, the lower air stream threshold has a predetermined difference to the higher air stream threshold and the two values are therefore shifted in parallel, when increased or decreased. Alternatively or additionally higher and lower air stream threshold can be linked by a predetermined factor preferably between 0.6 and 0.95, even more preferred between 0.7 and 0.9, in particular 0.8. Both of these alternatives can be used in turns. In particular the control unit can switch from a predetermined difference to a factor and vice versa, depending on operating parameters of the reactor. Therefore, only one of the values needs to be handled by the control unit whereas the other value is simply updated accordingly, reducing the workload on the control unit.

According to another preferred embodiment of the invention, the at least one control variable comprises a lower and a higher oxygen stream threshold. Hence, the control unit is configured to send a pair of corresponding oxygen stream thresholds preferably to every controlled reactor, wherein the reactor can adjust its own actual oxygen stream under the condition that it stays within the received thresholds. The control unit comprises a total oxygen stream value, wherein the sum of the higher oxygen stream thresholds of the plurality of reactors is lower or equal to the total oxygen stream value. The total oxygen stream value can be the maximum possible oxygen supply of an oxygen supply unit common for the plurality of reactors. The control unit is configured to read the actual oxygen streams from the plurality of reactors, compare the actual oxygen streams with the lower and higher oxygen stream thresholds, interpret a difference between the higher oxygen stream threshold and the actual oxygen stream which is smaller than a first oxygen-delta as an inquiry for increase of the oxygen stream thresholds and interpret a difference between the lower oxygen stream threshold and the actual oxygen stream which is smaller than a second oxygen-delta as an inquiry for decrease of the oxygen stream thresholds. The sum of first and second oxygen delta can be smaller than the difference between lower and higher oxygen stream threshold. The control unit is further configured to decrease the lower and/or higher oxygen stream thresholds for a reactor that inquired a lower oxygen stream and increase the lower and/or higher oxygen stream thresholds for a reactor that inquired a higher threshold under the condition that the total oxygen stream value is not exceeded.

According to another preferred embodiment, the control unit comprises a maximum oxygen stream for at least one of the plurality of reactors, wherein the control unit is configured to set the lower and/or higher oxygen stream thresholds of the reactor lower than the maximum oxygen stream of the reactor. Hence, the control unit knows every maximum oxygen stream of the reactors and sets the oxygen stream thresholds accordingly such that the higher oxygen stream threshold does not exceed the maximum oxygen stream. Additionally the reactor can be configured to not accept an increase of its oxygen stream thresholds that would exceed its maximum oxygen stream.

Alternatively, the control unit can read the maximum oxygen stream from the reactor and set the oxygen stream thresholds accordingly, or the control unit can have no information about the maximum oxygen stream and set the oxygen stream thresholds independently and the reactor itself sets its oxygen stream thresholds to the highest possible values when a value with a higher oxygen stream threshold that exceeds the maximum oxygen stream is received.

Additionally or alternatively, the control unit can comprise a minimum oxygen stream for at least one of the plurality of reactors, wherein lower and/or higher oxygen stream thresholds of the reactor are set to be higher than the minimum oxygen stream of the reactor. Hence, the control unit knows every minimum oxygen stream of the reactors and sets the oxygen stream thresholds accordingly such that the lower oxygen stream threshold does not fall below the minimum oxygen stream. Additionally, the reactor can be configured to not accept a decrease of its oxygen stream thresholds below its minimum oxygen stream. Alternatively, the control unit can read the minimum oxygen stream from the reactor and set the oxygen stream thresholds accordingly, or the control unit can have no information about the minimum oxygen stream and set the oxygen stream thresholds independently and the reactor itself sets its oxygen stream thresholds to the lowest values possible, when a lower oxygen stream threshold lower than the minimum oxygen stream is received.

The start-up procedure can be handled such that the reactors are already running, when their control is shifted to the inventive control unit. The control unit can read the parameters like the actual feed, air stream and oxygen stream and accept the control over the reactors only, when the parameters are within required margins like not exceeding the total feed target, the total air stream and/or the total oxygen stream.

The reactor system comprises a plurality of parallel reactors and a control unit communicating control variables to the reactors, wherein the control unit is a control unit as described above. The reactors are self-controlled and adjust their parameters according to their inner boundary conditions, like the temperature, the ratios between air, oxygen, feed, sulfur concentration in the feed or other parameters, and the control variables received from the control unit. Preferably, the reactors are configured to maximize the feed of the reactor and thus the throughput.

According to a preferred embodiment of the inventive reactor system, at least one of the plurality of reactors, in particular all reactors are roasting reactors, in particular fluidized bed reactors.

According to another preferred embodiment of the inventive reactor system the reactors have a joint exhaust gas after-treatment system with a maximum gas throughput lower than the sum of the maximum exhaust gas outputs of the plurality of reactors. Hence, when all reactors would run on 100 percent, the exhaust system would be overloaded. Since the reactors are controlled by the inventive control unit, such an overload is prevented.

The object is also solved by a method for controlling combined reactor system according to claim 16.

The reactor system comprises a plurality of parallel reactors, wherein a control unit communicates control variables to the reactors, and one of the control variables is a feed target, which is a threshold value regarding the feed of the reactor. The plurality of reactors adjust their parameters according to their inner boundary conditions and the received control variables in order to maximize the target value. The control unit comprises a total feed target and sets the respective feed targets for the plurality of reactors such that the sum of the feed targets of the plurality of reactors is lower or equal to the total feed target. Further, the control unit reads the actual feeds from the plurality of reactors, compares the actual feeds with the feed targets, and based on the comparison interprets the reactor as inquiring for a higher, the same or a lower feed target. The control unit then decreases the feed target for a reactor that inquired a lower threshold and increases the feed target for a reactor that inquired a higher threshold under the condition that the total feed target is not exceeded. The inventive method can comprise all the steps described above with regard to the control unit and the reactor system.

Further objectives, features, advantages and possible applications of the invention can also be taken from the following description of the attached drawings and the example. All features described and/or illustrated form the subject matter of the invention per se or in any combination, independent of their inclusion in the individual claims or their back-references.

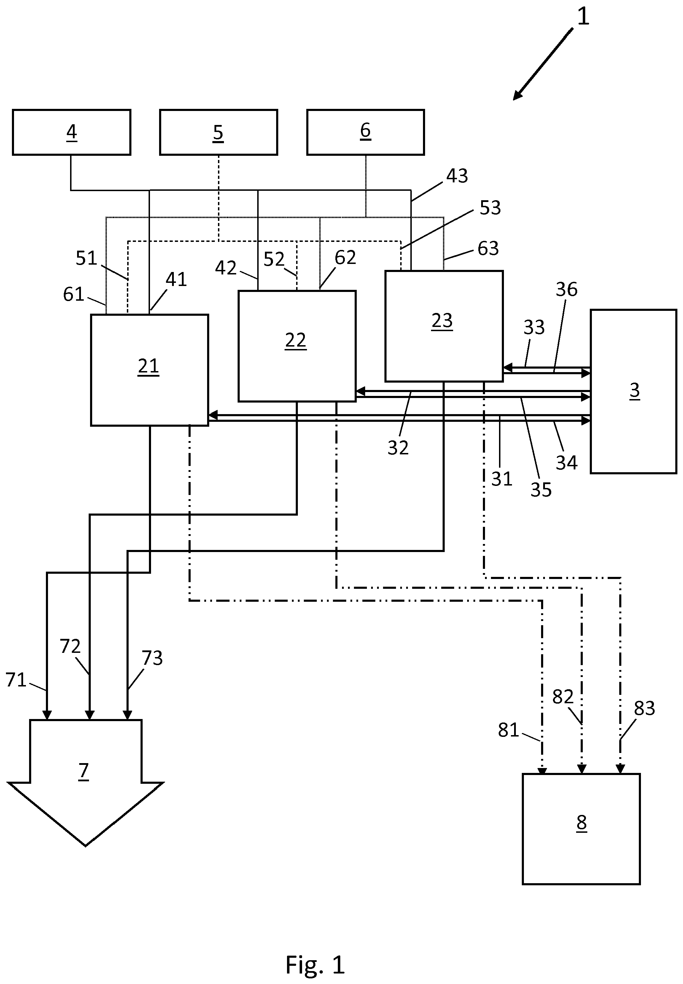

In the drawings:
Fig. 1 shows a schematic view of the inventive reactor system
Fig. 2 shows a graph of the feed control of three reactors of the inventive reactor system,
Fig. 3 shows a graph of the oxygen stream control of three reactors of the inventive reactor system;
The inventive reactor system 1 shown in Fig. 1 comprises three reactors 21, 22, 23. The first reactor 21 has a feed input 41, which is connected to a total feed supply 4, an oxygen stream input 51, which is connected to an oxygen supply unit 5 and an air stream input 61, which is connected to a total air stream supply 6. Likewise, the second reactor 22 has a feed input 42, which is connected to the total feed supply 4, an oxygen stream input 52, which is connected to the oxygen supply unit 5 and an air stream input 62, which is connected to the total air stream supply 6. The third reactor 23 has a feed input 43, which is connected to the total feed supply 4, an oxygen stream input 53, which is connected to the oxygen supply unit 5 and an air stream input 63, which is connected to the total air stream supply 6.

First reactor 21 has an output 71 of the produced material, which adds up with the output 72 of the second reactor 22 and the output 73 of the third reactor 23 to the total output 7.

The exhaust gases 81 of the first reactor 21, the exhaust gases 82 of the second reactor 22 and the exhaust gases 83 of the third reactor 23 are guided to a common exhaust after-treatment system 8.

A control unit 3 controls the first reactor 21, the second reactor 22 and the third reactor 23 by sending control variables 31 to the first reactor 21, control variables 32 to the second reactor 22 and control variables 33 to the third reactor 23. Furthermore, the control unit 3 reads parameters 34 of the first reactor 21, parameters 35 of the second reactor 22 and parameters 36 of the third reactor 23. The control variables 31, 32 and 33 each comprise a feed target 311, 321, 331, an upper airstream threshold 314, 324, 334 and lower airstream threshold 315, 325, 335 and an upper and lower oxygen threshold.

The reactors 21, 22 and 23 adjust their feeds 211, 221, 231 freely without exceeding the received feed targets 311, 321, 331, their oxygen streams within the margins of the upper and lower oxygen stream threshold and their airstreams 214, 224, 234 within the margins of the upper and lower air stream thresholds 314, 315, 324, 325, 334, 335.

The control unit 3 reads an actual feed 211, air stream 214 and oxygen stream as parameters 34 from the first reactor 21. Likewise, the control unit 3 reads the actual feeds 221, 231, air stream 224, 234 and oxygen stream of the second reactor 22 and third reactor as parameters 35 and 36.

The control unit 3 knows the actual demand for the total output 7, which is saved as a total feed target in the control unit 3. Furthermore, the maximum exhaust volume of the exhaust after-treatment system 8 is saved as a total air stream value in the control unit 3 and the maximum possible oxygen supply of the oxygen supply unit 5 is saved in the control unit 3 as a total oxygen stream value.

The control unit periodically performs control steps, for example every 10 seconds, where it reads the actual feed 211 of the first reactor 21 as part of its parameters 34. The control unit 3 than checks whether the actual feed 211 lies in an upper part of the allowable feed range in that it calculates the difference of the feed target 311 and the actual feed 211 and compares the difference to a second feed-delta 312. If the difference is smaller than the second feed-delta 312, the actual feed 211 lies in an upper part of the allowable feed range and the control unit 3 interprets this as the reactor 21 inquiring a higher feed target 311. The control unit also checks, whether the actual feed 211 lies in a lower part of the allowable feed range in that it compares the calculated difference of the feed target 311 and the actual feed 211 and compares it to a first feed-delta 313. If the difference is larger than the first feed-delta 313, the actual feed 211 lies in a lower part of the allowable feed range and the control unit 3 interprets this as the reactor 21 inquiring a lower feed target 311. The control unit 3 performs the same control step for the second reactor 22 and the third reactor 23.

The control unit 3 than decreases the feed target 311, 321, 331 of all the reactors 21, 22, 23 that inquired a lower feed target 311, 321, 331 by a decrease step, under the condition that this decrease does not result in a feed target 311, 321, 331, which is lower than a minimum feed 213 of the respective reactor 21, 22, 23. The control unit 3 than increases the feed target 311, 321, 331 of all the reactors 21, 22, 23 that inquired a higher feed target 311, 321, 331 by an increase step, under the condition that this increase does not result in a feed target 311, 321, 331, which is higher than a maximum feed 212 of the respective reactor 21, 22, 23 and under the condition that the sum of the feed targets 311, 321, 331 of the reactors 21, 22, 23 does not exceed the total feed target.

The control unit also reads the actual air stream 214 of the first reactor 21 as part of its parameters 34. The control unit 3 than checks whether the actual air stream 214 lies in an upper part of the allowable air stream range in that it calculates the difference of the upper air stream threshold 314 and the actual air stream 214 and compares the difference to a second air-delta 316. If the difference is smaller than the second air-delta 316, the actual air stream 214 lies in an upper part of the allowable air stream range and the control unit 3 interprets this as the reactor 21 inquiring higher air stream thresholds 314, 315. The control unit 3 also checks, whether the actual air stream 214 lies in a lower part of the allowable air stream range in that it calculates the difference of the lower air stream threshold 315 and the actual air stream 214 and compares the difference to a first air-delta 317. If the difference is smaller than the first air stream-delta 317, the actual air stream 214 lies in a lower part of the allowable air stream range and the control unit 3 interprets this as the reactor 21 inquiring lower air stream thresholds 314, 315. The control unit 3 performs the same step regarding the air stream for the second reactor 22 and the third reactor 23.

The control unit 3 than decreases the air stream thresholds 314, 315, 324, 325, 334, 335 of all the reactors 21, 22, 23 that inquired lower air stream thresholds 314, 315, 324, 325, 334, 335 by a decrease step, under the condition that this decrease does not result in air stream thresholds 314, 315, 324, 325, 334, 335, which are lower than a minimum air stream 216 of the respective reactor 21, 22, 23. The control unit 3 than increases the air stream thresholds 314, 315, 324, 325, 334, 335 of all the reactors 21, 22, 23 that inquired higher air stream thresholds 314, 315, 324, 325, 334, 335 by an increase step, under the condition that this increase does not result in air stream thresholds 314, 315, 324, 325, 334, 335, which are higher than a maximum air stream 215 of the respective reactor 21, 22, 23 and under the condition that the sum of the higher air stream thresholds 314, 324, 334 of the reactors 21, 22, 23 does not exceed the total air stream value.

The control unit also reads the actual oxygen stream of the first reactor 21 as part of its parameters 34. The control unit 3 than checks whether the actual oxygen stream lies in an upper part of the allowable oxygen stream range in that it calculates the difference of the upper oxygen stream threshold and the actual oxygen stream and compares the difference to a second oxygen-delta. If the difference is smaller than the second oxygen-delta, the actual oxygen stream lies in an upper part of the allowable oxygen stream range and the control unit 3 interprets this as the reactor 21 inquiring higher oxygen stream thresholds. The control unit 3 also checks, whether the actual oxygen stream lies in a lower part of the allowable oxygen stream range in that it calculates the difference of the lower oxygen stream threshold and the actual oxygen stream and compares the difference to a first oxygen-delta. If the difference is smaller than the first oxygen stream-delta, the actual oxygen stream lies in a lower part of the allowable oxygen stream range and the control unit 3 interprets this as the reactor 21 inquiring lower oxygen stream thresholds. The control unit 3 performs the same steps regarding the oxygen stream for the second reactor 22 and the third reactor 23.

The control unit 3 than decreases the oxygen stream thresholds of all the reactors 21, 22, 23 that inquired lower oxygen stream thresholds by a decrease step, under the condition that this decrease does not result in oxygen stream thresholds, which are lower than a minimum oxygen stream of the respective reactor 21, 22, 23. The control unit 3 than increases the oxygen stream thresholds of all the reactors 21, 22, 23 that inquired higher oxygen stream thresholds by an increase step, under the condition that this increase does not result in oxygen stream thresholds, which are higher than a maximum oxygen stream of the respective reactor 21, 22, 23 and under the condition that the sum of the higher oxygen stream thresholds of the reactors 21, 22, 23 does not exceed the total oxygen stream value.

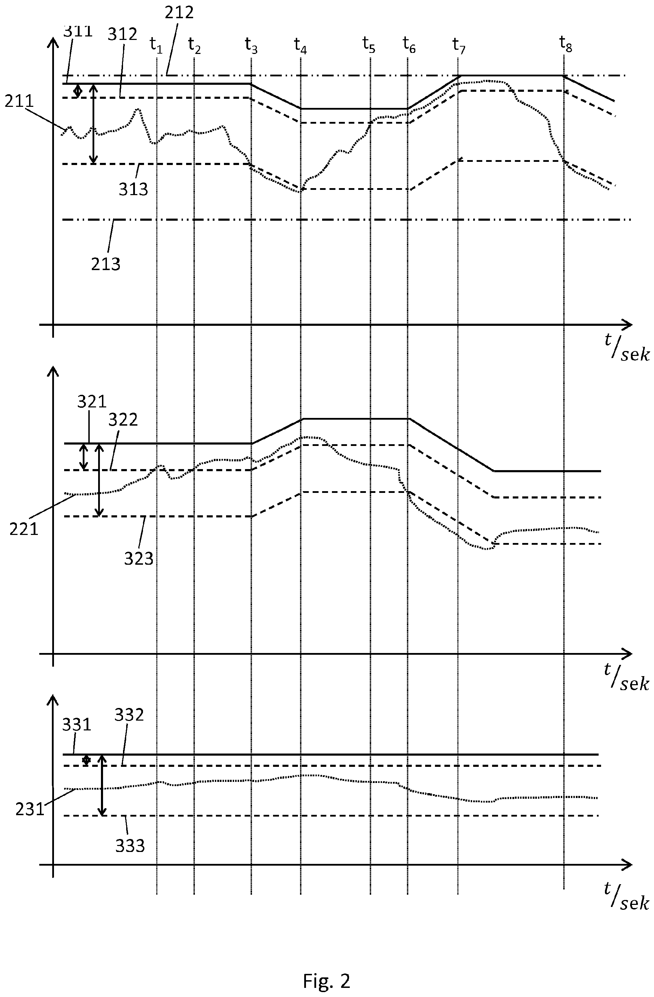

Figure 2 shows an example for the development over time regarding the feed of the first reactor 21 in the topmost graph, the second reactor 22 in the middle graph and the third reactor 23 in the bottom graph.

The topmost graph regarding the first reactor 21 shows the actual feed 211, the feed target 311, a first feed-delta 313 and second feed-delta 312 as well as a maximum feed 212 and a minimum feed 213. The first feed-delta 313 and the second feed-delta 312 are differences to the feed target 311 as indicated by the double-ended arrows. The first and second feed-delta 313 and 312 are further shown as dotted lines illustrating the difference to the feed target 311 over the shown period of time. Until the time t₃ the actual feed 211 is varying below the feed target 311 and within the two dotted lines. Hence, the difference of the actual feed 211 to the feed target 311 is not larger than the first feed-delta 313 and not smaller than the second feed-delta 312. The control unit 3 thus does not interpret these values as an inquiry for either increase or decrease of the feed target 311.

The same is true for the third reactor 23 over the complete shown period of time. The actual feed 231 of the third reactor 23 is varying below the feed target 331 and within the two dotted lines illustrating the first and second feed-delta 332, 333. Hence, the difference of the actual feed 231 to the feed target 331 is not larger than the first feed-delta 333 and not smaller than the second feed-delta 332. The control unit 3 thus does not interpret these values as an inquiry for either increase or decrease of the feed target 331.

The actual feed 221 of the second reactor 22 also starts within the two dotted lines illustrating the first feed-delta 323 and the second feed-delta 322, but crosses the dotted line illustrating the second feed-delta 322 at time t₁. Hence, the difference of the actual feed 221 to the feed target 321 is smaller than the second feed-delta 322 at this point and the control unit 3 interprets this as an inquiry for higher feed target 321. The control unit 3 then calculates the sum of all the feed targets 311, 321, 331 of the first reactor 21, the second reactor 22 and the third reactor 23 and subtracts this sum from the total feed target comprised in the control unit 3. In the shown example of figure 2, the sum of the feed targets 311, 321 and 331 equals the total feed target and thus there is no free target. Therefore, even though the second reactor inquired for higher feed target 321, the feed target 321 of the second reactor 23 is not increased. This is also the case in the time between t₂ and t₃.

At the time t₃, the actual feed 211 of the first reactor 21 drops below the lower dotted line and hence the difference of the actual feed 211 to the feed target 311 is larger than the first feed-delta 313 and the control unit 3 interprets this as an inquiry for a lower feed target 311. Since the feed target 311 of the first reactor 21 is still much higher than the minimum feed 213 of the first reactor 21, the control unit 3 decreases the feed target 311 of the first reactor 21 as long as the actual feed 211 of the first reactor 21 stays below the dotted line illustrating the first feed-delta 313. This results in free target, meaning that the sum of the feed targets 311, 321, 331 of the first, the second and the third reactor 21, 22, 23 is smaller than the total feed target comprised in the control unit 3.

Since the second reactor 22 has an actual feed 221 which is still higher than the upper dotted line illustrating the second feed-delta 322 of the second reactor 22, and hence the difference between the actual feed 221 and the feed target 321 of the second reactor 22 is smaller than the second feed-delta 322 of the second reactor 22, the control unit 3 still interprets this as the second reactor 22 inquiring for higher feed target 321. Due to the drop of the feed target 311 of the first reactor 21 and the resulting free target, the control unit 3 can now increase the feed target 321 of the second reactor 22.

At the time t₄, the actual feed 211 of the first reactor 21 raises above the dotted line illustrating the first feed-delta and thus the difference between the actual feed 211 and the feed target 311 of the first reactor 21 is no longer larger than a first feed-delta 313. The control unit 3 thus does not interpret this as an inquiry for lower feed target 311 anymore. The feet target 311 of the first reactor 21 is thus constant again between t₄ and t₅.

From the time t₅, the actual feed 211 of the first reactor 21 lies above the dotted line illustrating the second feed-delta 312 and thus the difference between the actual feed 211 and the feed target 311 is smaller than the second feed-delta 312. The control unit 3 interprets this as an inquiry for higher feed target 311 of the first reactor 21. Again, the sum of the feed targets 311, 321 and 331 of the first, second and third reactor 21, 22 and 23 already equals the total feed target and thus no further increase of the feed target 311 of the first reactor 21 is possible.

At the time t₆, the actual feed 221 of the second reactor 22 drops below the dotted line and thus the difference between the actual feed 221 and the feed target 321 of the second reactor 22 is larger than a first feed delta 323 of the second reactor 22 and hence the control unit 3 decreases the feed target 321 of the second reactor 22. Since the first reactor is still inquiring for higher feed target at this time, the feed target 311 of the first reactor 21 is increased.

At time t₇, the second reactor 22 is still inquiring for lower feed target 321 and hence the feed target 321 of the second reactor 22 is still decreased creating free feed target. Even though the first reactor 21 is still inquiring for a higher feed target 311, since the difference between the actual feed 211 and the feed target 311 is still smaller than the second feed-delta 312, the feed target 311 of the first reactor 21 is not further increased since the feed target 311 has reached the maximum feed 212 of the first reactor 21.

At the time t₈ the actual feed 211 of the first reactor 21 drops below the first feed-delta 313 again and thus the control unit 3 decreases the feed target 311 of the first reactor 21. Since no other reactor inquired for a higher feed target at that time, the sum of the feed targets 311, 321 and 331 of the first, the second and the third reactor 21, 22 and 23 is lower than the total feed target comprised in the control unit 3.

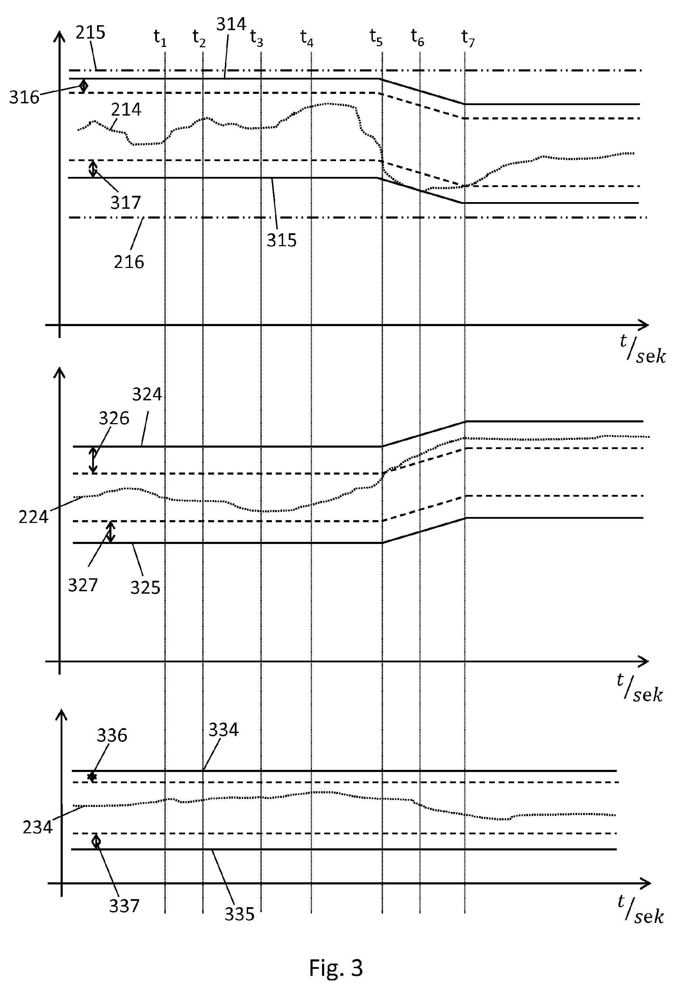

Figure 3 shows a corresponding example for the development over time regarding the air stream of the first reactor 21 in the topmost graph, the second reactor 22 in the middle graph and the third reactor 23 in the bottom graph.

The topmost graph regarding the first reactor 21 shows the actual air stream 214, which is adjusted by the reactor between the upper airstream threshold 314 and the lower airstream threshold 315. The topmost graph further shows a first air-delta 317, which is depicted as an double-ended arrow and a dotted line in the distance of the first air-delta to the depicted lower airstream threshold 315. Furthermore, figure 3 shows the second air-delta as a double-ended arrow and a dotted line with the respective distance to the upper airstream threshold 314. Furthermore, the upper graph additionally shows a maximum air stream 215 and a minimum air stream 216.

The allowable air stream range between the lower airstream threshold 315 and the upper airstream threshold 314 is divided in three parts by the first air-delta 317 and the second air-delta 316. An upper part, where the difference between the actual airstream and the upper air stream threshold is smaller than the second air-delta, a bottom part, where the difference between the actual airstream and the lower air stream threshold is smaller than the first air-delta and the middle part, where the difference between the actual airstream and the upper air stream threshold is larger than the second air-delta and the difference between the actual airstream and the lower air stream threshold is larger than the first air-delta.

Until the time t₅ the actual air stream 214 of the first reactor 21 stays within the two dotted lines and thus in the middle part of the allowable range between the lower airstream threshold 315 and the upper airstream threshold 314, in which the control unit 3 interprets the reactor as not inquiring for a higher or a lower threshold.

At time t₅, the actual air stream falls below the lower dotted line and thus in the bottom part, where the difference between the actual air stream 214 and the lower airstream threshold 315 is smaller than the first air-delta 317 and the control unit 3 interprets the reactor as inquiring for a lower threshold. The control unit 3 decreases upper and lower airstream thresholds until the time t₇, when the actual air stream 214 rises again above the lower dotted line, depicting the first air-delta 317.

The middle graph shows the actual air stream 224 of the second reactor 22 with an upper airstream threshold 324 and a lower airstream threshold 325 of the second reactor 22. Again, first and second air-delta 327, 326 of the second reactor 22 are depicted as double-ended arrows and a dotted line. The actual air stream 224 stays within the middle part of the allowable range until time t₅. At this time the actual air stream 224 raises above the upper dotted line depicting the second air-delta, 326where the difference between the actual air stream 224 and the upper airstream threshold 324 of the second reactor 22 is smaller than the second air-delta 326 of the second reactor 22. The control unit 3 thus increases the air stream thresholds 324, 325. After the time t₇, the actual air stream 224 of the second reactor 22 is still high enough such that the difference between the actual air stream 224 and the upper airstream threshold 324 is smaller than the second air-delta 326. Since the sum of the air stream thresholds 314, 324, 334 already equal the total air stream threshold comprised in the control unit, the air stream thresholds of the second reactor 22 are not further increased.

The bottom graph of figure 3 shows the actual air stream 234 of the third reactor 23 as well as the upper airstream threshold 334, lower airstream threshold 335, the first air-delta 337 and second air-delta 336 of the third reactor 23. Since the actual air stream 234 of the third reactor 23 stays in the middle part of the allowable range the whole time, no decrease or increase is performed by the control unit 3.

### List of Reference Numerals:

- 1: reactor system
- 21: first reactor
- 22: second reactor
- 23: third reactor
- 3: control unit
- 31: control variables first reactor
- 32: control variables second reactor
- 33: control variables third reactor
- 4: total feed supply
- 41: feed input first reactor
- 42: feed input second reactor
- 43: feed input third reactor
- 5: oxygen supply unit
- 51: oxygen stream input first reactor
- 52: oxygen stream input second reactor
- 53: oxygen stream input third reactor
- 6: total air supply
- 61: air stream input first reactor
- 62: air stream input second reactor
- 63: air stream input third reactor
- 7: total output
- 71: output first reactor
- 72: output second reactor
- 73: output third reactor
- 8: exhaust gas after-treatment
- 81: exhaust first reactor
- 82: exhaust second reactor
- 83: exhaust third reactor

- 211: actual feed first reactor
- 212: maximum feed first reactor
- 213: minimum feed first reactor
- 214: actual air stream first reactor
- 215: maximum air stream first reactor
- 216: minimum air stream first reactor
- 221: actual feed second reactor
- 224: actual air stream second reactor
- 231: actual feed third reactor
- 234: actual air stream third reactor
- 311: feed target first reactor
- 312: second feed-delta first reactor
- 313: first feed-delta first reactor
- 314: upper air stream threshold first reactor
- 315: lower air stream threshold first reactor
- 316: second air-delta first reactor
- 317: first air-delta first reactor
- 321: feed target second reactor
- 322: second feed-delta second reactor
- 323: first feed-delta second reactor
- 324: upper air stream threshold second reactor
- 325: lower air stream threshold second reactor
- 326: second air-delta second reactor
- 327: first air-delta second reactor
- 331: feed target third reactor
- 332: second feed-delta third reactor
- 333: first feed-delta third reactor
- 334: upper air stream threshold third reactor
- 335: lower air stream threshold third reactor
- 336: second air-delta third reactor
- 337: first air-delta third reactor

## Claims

1. Combined reactor system (1) comprising
at least two of parallel reactors (21, 22, 23), each of the reactors (21, 22, 23) being fed with at least one reactant with a respective time depending actual feed rate (211, 221, 231), wherein the reactors (21, 22, 23) share
• a total feed supply (4), wherein the total feed supply (4) cannot supply all the reactors (21, 22, 23) running at full capacity at the same time, and/or
• a joint exhaust after-treatment system (8), wherein the joint exhaust after-treatment system (8) cannot handle exhaust gases (81, 82, 83) of all reactors (21, 22, 23) running at full capacity at the same time, and
a control unit (3) configured to communicate, to each of the reactors (21, 22, 23), respectively at least one control variable (21, 22, 23) for the reactor (21, 22, 23);
wherein each of the control variables (31, 32, 33) comprises a feed target (311, 321, 331) for the respective reactor (21, 22, 23), which is a threshold value regarding the actual feed rate (211, 221, 231) of said respective reactor (21, 22, 23),
wherein the reactors (21, 22, 23) are self-controlled and are configured to adjust their parameters (34, 35, 36, 211, 214, 221, 224, 231, 234) according to their inner boundary conditions and the respective at least one control variable (31, 32, 33) received from the control unit (3), wherein each reactor (21, 22, 23) is configured to adjust its own actual feed rate (211, 221, 231) under the condition that its actual feed reed (211, 221, 231) is smaller than the feed target (311, 321, 331) for this reactor (21, 22, 23) and to maximize its actual feed rate (211, 221, 231) and therefor tries to reach its feed target (311, 321, 331),
wherein a total feed target is stored in the control unit (3) as an upper boundary value, wherein the total feed target indicates a total desired feed of the reactors (21, 22, 23), which determines a total throughput of the reactors (21, 22, 23),
wherein the control unit (3) is configured such that a sum of the feed targets (311, 321, 331) communicated to the reactors (21, 22, 23) is lower or equal to the total feed target,
wherein the control unit (3) is configured to constantly repeat the steps of:
• reading the actual feed rates (211, 221, 231) of the plurality of reactors (21, 22, 23) by receiving values of the actual feed rates (211, 221, 231) from subordinate control units responsible for the individual reactors (21, 22, 23) or by access to corresponding memories of such subordinate control units,
• for each of the reactors (21, 22, 23), interpreting the respective reactor (21, 22, 23), depending on the actual feed rate (211, 221, 231) of and the feed target (311, 321 331) for the respective reactor (21, 22, 23) as inquiring a higher, the same, or a lower feed target (311, 321, 331), and
• decreasing the feed target (311, 321, 311) for those of the reactors (21, 22, 23) that inquire a lower feed target (311, 321, 331) and increasing the feed target (311, 321, 331) those of the reactors (21, 22, 23) that inquires a higher feed target (311, 321, 331) under the condition that the sum of the feed targets (311, 321, 331) for the reactors (21, 22, 23) does not exceed the total feed target,
wherein the control unit (3) shifts the feed targets (311, 321, 331) between the reactors (21, 22, 23) depending on an actual use of the reactors (21, 22, 23) in order to maximize the total throughout of the reactors (21, 22, 23).

2. Combined reactor system (1) according to claim 1, **characterized in that** the control unit (3) is configured to calculate a difference between the feed target (311, 321, 331) and the actual feed rate (211, 221, 231) of each reactor (21, 22, 23) and interprets the reactor (21, 22, 23) as inquiring for a lower feed target (311, 321, 331), when the difference is larger than a first difference stored in the control unit (3) as a first feed-delta (313, 323, 333), and the control unit (3) interprets the reactor (21, 22, 23) as inquiring for higher feed target (311, 321, 331), when the calculated difference between the feed target (311, 321, 331) and the actual feed rate (211, 221, 231) is smaller than a second difference stored in the control unit (3) as a second feed-delta (312, 322, 332).

3. Combined reactor system (1) according to claim 1, **characterized in that** the at least one control variable (31, 32, 33) comprises a lower threshold value regarding the actual feed rate of the reactor (21, 22, 23), and that the control unit (3) is configured to calculate a difference between the lower threshold value and the actual feed rate of each reactor (21, 22, 23) and interpret a difference, which is smaller than a first difference stored in the control unit (3) as a first feed-delta as the reactor (21, 22, 23) inquiring a lower feed target and that the control unit (3) is configured to calculate a difference between the feed target and the actual feed rate of each reactor (21, 22, 23) and interpret a difference, which is smaller than a second difference stored in the control unit (3) as a second feed-delta as the reactor (21, 22, 23) inquiring a higher feed target.

4. Combined reactor system (1) according to any of the preceding claims, **characterized in that** the feed targets (311, 321, 331) of all reactors (21, 22, 23) inquiring a higher feed target (311, 321, 331) are increased such that the sum of all feed targets (311, 321, 331) equals the total feed target.

5. Combined reactor system (1) according to claim 4, **characterized in that** the feed targets (311, 321, 331) of the reactors (21, 22, 23) inquiring a higher feed target (311, 321, 331) are increased evenly.

6. Combined reactor system (1) according to any of claims 1 to 3, **characterized in that** the feed target (311, 321, 331) is increased and/or decreased by a fixed step or rate.

7. Combined reactor system (1) according to any of the preceding claims, **characterized in that** the control unit (3) comprises a maximum feed (212) for at least one of the plurality of reactors (21, 22, 23), wherein the control unit (3) is configured to set the feed target (311) of the reactor (21) lower than the maximum feed (212) of the reactor (21) and/or comprises a minimum feed (213) for at least one of the plurality of reactors (21, 22, 23), wherein the feed target (311) of the reactor (21) is set to be higher than the minimum feed (213) of the reactor (21).

8. Combined reactor system (1) according to any of the preceding claims, **characterized in that** the at least one control variable (31, 32, 33) comprises a lower air stream threshold (315, 325, 335) and a higher air stream threshold (314, 324, 334) and the control unit (3) comprises a total air stream value, wherein a sum of the higher air stream thresholds (315, 325, 335) of the plurality of reactors (21, 22, 23) is lower or equal to the total air stream value, wherein the control unit (3) is configured to, for each reactor (21, 22, 23),
• read an actual air stream value (214, 224, 234) of the respective reactor (21, 22, 23), compare the actual air stream value (214, 224, 234) with the lower and higher air stream threshold (314, 315, 324, 325, 334, 335) of the reactor (21, 22, 23) by calculating the differences,
• interpret the difference between the higher air stream threshold (314, 324, 334) and the actual air stream value (214, 224, 234) being smaller than a second air-delta (316, 326, 336) as an inquiry for increase of the air stream thresholds (314, 315, 324, 325, 334, 335), and
• interpret the difference between the lower air stream threshold (315, 325, 335) and the actual air stream value (214, 224, 234) being smaller than a first air-delta (317, 327, 337) as an inquiry for a decrease of the air stream thresholds (314, 315, 324, 325, 334, 335),
and wherein the control unit (3) is configured to decrease the lower and/or the higher air stream thresholds (314, 315, 324, 325, 334, 335) for those of the reactors (21, 22, 23) that inquired decrease of the air stream thresholds (314, 315, 324, 325, 334, 335) and increase the lower and/or higher air stream thresholds (314, 315, 324, 325, 334, 335) for those of the reactors that inquired increase of the air stream thresholds (314, 315, 324, 325, 334, 335) under the condition that the total air stream value is not exceeded.

9. Combined reactor system (1) according to claim 8, **characterized in that** the total air stream value depends on a maximum gas throughput of a joint exhaust gas after-treatment system (8) arranged after the plurality of reactors (21, 22, 23), wherein the total air stream value is a fixed value or is further depending on an oxygen stream value of reactors (21, 22, 23).

10. Combined reactor system (1) according to claim 8 or 9, **characterized in that** the control unit (3) comprises a maximum air stream value (215) for at least one of the reactors (21, 22, 23), wherein the control unit (3) is configured to set the lower and/or higher air stream thresholds (314, 315) of the reactor (21) lower than the maximum air stream value (215) of the reactor (21) and/or comprises a minimum air stream value (216) for at least one of the reactors (21, 22, 23), wherein the control unit (3) is configured to set lower and/or higher air stream thresholds (314, 315) of the reactor (21) to be higher than the minimum air stream value (216) of the reactor (21).

11. Combined reactor system (1) according to any of the claims 8 to 10, **characterized in that** the lower air stream threshold (315, 325, 335) has a predetermined difference to the higher air stream threshold (314, 324, 334) for the same reactor (21, 22, 23) and/or a predetermined factor between 0.6 and 0.95, preferably between 0.7 and 0.9, in particular 0.8.

12. Combined reactor system (1) according to any of the preceding claims, **characterized in that,** for each of the reactors (21, 22, 23), the respective at least one control variable (31, 32, 33) comprises a lower and a higher oxygen stream threshold, wherein the control unit (3) comprises a total oxygen stream value, wherein a sum of the higher oxygen stream thresholds of the plurality of reactors (21, 22, 23) is lower or equal to the total oxygen stream value,
that the control unit (3) is configured to, for each of the reactors (21, 22, 23),
• read an actual oxygen stream value from the respective reactor, compare the actual oxygen stream value with the lower and higher oxygen stream threshold of the reactor (21, 22, 23) by calculating the differences,
• interpret the difference between the higher oxygen stream threshold and the actual oxygen stream value being smaller than a first oxygen-delta as an inquiry for increase of the oxygen stream thresholds and
• interpret the difference between the lower oxygen stream threshold and the actual oxygen stream value being smaller than a second oxygen-delta as an inquiry for decrease of the oxygen stream thresholds,
and wherein the control unit (3) is configured to decrease the lower and/or higher oxygen stream thresholds for those of the reactors (21, 22, 23) that inquired lower oxygen stream thresholds and increases the lower and/or higher oxygen stream thresholds for those of the reactors (21, 22, 23) that inquired higher oxygen stream thresholds under the condition that the total oxygen stream value is not exceeded.

13. Combined reactor system (1) according to claim 12, **characterized in that** the control unit (3) comprises a maximum oxygen stream value for at least one of the reactors (21, 22, 23) or is configured to read the maximum oxygen stream value from the reactor (21, 22, 23), wherein the control unit (3) is configured to set the lower and/or higher oxygen stream thresholds of the reactor (21, 22, 23) lower than the maximum oxygen stream value of the reactor (21, 22, 23) and/or that the control unit (3) comprises a minimum oxygen stream value for at least one of the reactors (21, 22, 23) or is configured to read the minimum oxygen stream value from this reactor (21, 22, 23), wherein the control unit (3) is configured to set lower and/or higher oxygen stream thresholds of the reactor (21, 22, 23) to be higher than the minimum oxygen stream value of the reactor (21, 22, 23).

14. Combined reactor system (1) according to any of the preceding claims, **characterized in that** at least one of the reactors (21, 22, 23), in particular all reactors (21, 22, 23), are roasting reactors, in particular fluidized bed reactors.

15. Combined reactor system (1) according to any of the preceding claims, **characterized in that** the joint exhaust gas after-treatment system (8) has a maximum gas throughput lower than a sum of maximum exhaust gas outputs of the plurality of reactors (21, 22, 23) and/or the reactors (21, 22, 23) have a joint oxygen supply (5) with a maximum oxygen volume lower than a sum of the maximum demands of the plurality of reactors (21, 22, 23).

16. Method for controlling a combined reactor system (1), according to any of the preceding claims, comprising a plurality of parallel reactors (21, 22, 23) and a control unit (3), each of the reactors (21, 22, 23) being fed with at least one reactant with a respective, time-depending actual feed rate (211, 221, 231), wherein the reactors (21, 22, 23) share
• a total feed supply (4), wherein the total feed supply (4) cannot supply all the reactors (21, 22, 23) running at full capacity at the same time, and/or
• a joint exhaust after-treatment system (8), wherein the joint exhaust after-treatment system (8) cannot handle exhaust gases (81, 82, 83) of all reactors (21, 22, 23) running at full capacity at the same time,
wherein the control unit (3) communicates, to each of the reactors (21, 22, 23), respectively at least one control variable (31, 32, 33) for the reactor (21, 22, 23),
wherein each of the control variables (31, 32, 33) comprises a feed target (311, 321, 331) for the respective reactor (21, 22, 23), which is a threshold value regarding the actual feed rate (211, 221, 231) of said respective reactor (21, 22, 23),
wherein the reactors (21, 22, 23) are self-controlled and adjust their parameters (34, 35, 36, 211, 214, 221, 224, 231, 234) according to their inner boundary conditions and the respective at least one control variable (31, 32, 33) received from the control unit (3), wherein each reactor (21, 22, 23) adjusts its own actual feed rate (211, 221, 231) under the condition that it is smaller than the feed target (311, 321, 331) for this reactor (21, 22, 23) and maximizes its actual feed rate (211, 221, 231) and therefor tries to reach its feed target (311, 321, 331),
wherein the control unit (3) comprises a total feed target, wherein the total feed target indicates a total desired feed of the reactors (21, 22, 23), which determines a total throughput of the reactors (21, 22, 23),
wherein the control unit (3) sets the respective feed targets (311, 321, 331) communicated to the reactors (21, 22, 23) such that a sum of the feed targets (311, 321, 331) of the plurality of reactors (21, 22, 23) is lower or equal to the total feed target,
wherein the control unit (3) constantly repeats the steps of:
• reading the actual feed rates (211, 221, 231) of the plurality of reactors (21, 22, 23) by receiving values of the actual feed rates (211, 221, 231) from subordinate control units responsible for the individual reactors (21, 22, 23) or by access to corresponding memories of such subordinate control units,
• comparing, for each of the reactors (21, 22, 23), the actual feed rate (211, 221, 231) of the respective reactor (21, 22, 23) with the feed target (311, 321, 331) for said respective reactor (21, 22, 23), and, based on the comparison, interprets said respective reactor (21, 22, 23) as inquiring for a higher, the same or a lower feed target (311, 321, 331),
• decreasing the feed target (311, 321, 331) for each one of the reactors (21, 22, 23) that inquired a lower feed target (311, 321, 331) and increasing the feed target (311, 321, 331) for each one of the reactors (21, 22, 23) that inquired a higher feed target (311, 321, 331) under the condition that the total feed target is not exceeded,
wherein the control unit (3) shifts the feed targets (311, 321, 331) between the reactors (21, 22, 23) depending on an actual use of the reactors (21, 22, 23) in order to maximize the total throughout of the reactors (21, 22, 23).

17. Method according to claim 16, **characterized in that** the control unit (3) calculates a difference between the feed target (311, 321, 331) and the actual feed rate (211, 221, 231) of each reactor (21, 22, 23) and interprets the reactor (21, 22, 23) as inquiring for a lower feed target (311, 321, 331), when the calculated difference is larger than a first difference stored in the control unit (3) as a first feed-delta (313, 323, 333), and the control unit (3) interprets the reactor (21, 22, 23) as inquiring for higher feed target (311, 321, 331), when the calculated difference between the feed target (311, 321, 331) and the actual feed rate (211, 221, 231) is smaller than a second difference stored in the control unit (3) as a second feed-delta (312, 322, 332).

18. Method according to claim 16 or 17, **characterized in that** the at least one control variable (31, 32, 33) comprises a lower threshold value regarding the actual feed rate of the reactor (21, 22, 23), and that the control unit (3) calculates a difference between the lower threshold value and the actual feed rate of each reactor (21, 22, 23) and interprets a difference, which is smaller than a first difference stored in the control unit (3) as a first feed-delta as the reactor (21, 22, 23) inquiring a lower feed target and that the control unit (3) calculates a difference between the feed target and the actual feed rate of each reactor (21, 22, 23) and interprets a difference, which is smaller than a second difference stored in the control unit (3) as a second feed-delta as the reactor (21, 22, 23) inquiring a higher feed target.

19. Method according to any of claims 16 to 18, **characterized in that** the feed targets (311, 321, 331) of all reactors (21, 22, 23) inquiring a higher feed target (311, 321, 331) are increased such that the sum of all feed targets (311, 321, 331) equals the total feed target.

20. Method according to any of claims 16 to 19, **characterized in that** the feed targets (311, 321, 331) of the reactors (21, 22, 23) inquiring a higher feed target (311, 321, 331) are increased evenly.

21. Method according to any of claims 16 to 20, **characterized in that** the feed target (311, 321, 331) is increased and/or decreased by a fixed step or rate.

22. Method according to any of claims 16 to 21, **characterized in that** the control unit (3) comprises a maximum feed (212) for at least one of the plurality of reactors (21, 22, 23), wherein the control unit (3) sets the feed target (311) of the reactor (21) lower than the maximum feed (212) of the reactor (21) and/or comprises a minimum feed (213) for at least one of the plurality of reactors (21, 22, 23), wherein the feed target (311) of the reactor (21) is set to be higher than the minimum feed (213) of the reactor (21).

23. Method according to any of claims 16 to 22, **characterized in that** the at least one control variable (31, 32, 33) comprises a lower air stream threshold (315, 325, 335) and a higher air stream threshold (314, 324, 334) and that the control unit (3) comprises a total air stream value, wherein a sum of the higher air stream thresholds (314, 324, 334) of the plurality of reactors (21, 22, 23) is lower or equal to the total air stream value, wherein the control unit (3), for each reactor (21, 22, 23),
• reads an actual air stream value (214, 224, 234) of the respective reactor (21, 22, 23), compares the actual air stream value (214, 224, 234) with the lower and higher air stream thresholds (314, 315, 324, 325, 334, 335) of the reactor (21, 22, 23) by calculating the differences,
• interprets the difference between the higher air stream threshold (314, 324, 334) and the actual air stream value (214, 224, 234) being smaller than a second air-delta (316, 326, 336) as an inquiry for increase of the air stream thresholds (314, 315, 324, 325, 334, 335) and
• interprets the difference between the lower air stream threshold (315, 325, 335) and the actual air stream value (214, 224, 234) being smaller than a first air-delta (317, 327, 337) as an inquiry for a decrease of the air stream thresholds (314, 315, 324, 325, 334, 335), and
wherein the control unit (3) decreases the lower and/or higher air stream thresholds (314, 315, 324, 325, 334, 335) for those of the reactors (21, 22, 23) that inquired decrease of the air stream thresholds (314, 315, 324, 334, 335) and increases the lower and/or higher air stream thresholds (314, 315, 324, 334, 335) for those of the reactors (21, 22, 23) that inquired increase of the air stream thresholds (314, 315, 324, 325, 334, 335) under the condition that the total air stream value is not exceeded.

24. Method according to claim 23, **characterized in that** the total air stream value depends on a maximum gas throughput of the joint exhaust gas after-treatment system (8) arranged after the plurality of reactors (21, 22, 23), wherein the total air stream value is a fixed value or is further depending on an oxygen stream value of reactors (21, 22, 23).

25. Method according to claim 23 or 24, **characterized in that** the control unit (3) comprises a maximum air stream value (215) for at least one of the reactors (21, 22, 23), wherein the control unit (3) sets the lower and/or higher air stream thresholds (314, 315) of the reactor (21) lower than the maximum air stream value (215) of the reactor (21) and/or comprises a minimum air stream value (216) for at least one of the reactors (21, 22, 23), wherein the control unit (3) sets lower and/or higher air stream thresholds (314, 315) of the reactor (21) to be higher than the minimum air stream value (216) of the reactor (21).

26. Method according to any of claims 23 to 25, **characterized in that** the lower air stream threshold (315, 325, 335) has a predetermined difference to the higher air stream threshold (314, 324, 334) for the same reactor (21, 22, 23) and/or a predetermined factor between 0.6 and 0.95, preferably between 0.7 and 0.9, in particular 0.8.

27. Method according to any of claims 16 to 26, **characterized in that,** for each of the reactors (21, 22, 23), the respective at least one control variable (31, 32, 33) comprises a lower and a higher oxygen stream threshold, wherein the control unit (3) comprises a total oxygen stream value, wherein a sum of the higher oxygen stream thresholds of the plurality of reactors (21, 22, 23) is lower or equal to the total oxygen stream value,
that the control unit (3), for each of the reactors (21, 22, 23)
• reads an actual oxygen stream value from the respective reactor (21, 22, 23), compares the actual oxygen stream value with the lower and higher oxygen stream threshold of the reactor (21, 22, 23) by calculating the differences,
• interprets the difference between the higher oxygen stream threshold and the actual oxygen stream value being smaller than a first oxygen-delta as an inquiry for increase of the oxygen stream thresholds and
• interprets the difference between the lower oxygen stream threshold and the actual oxygen stream value being smaller than a second oxygen-delta as an inquiry for decrease of the oxygen stream thresholds,
and wherein the control unit (3) decreases the lower and/or higher oxygen stream thresholds for those of the reactors (21, 22, 23) that inquired lower oxygen stream thresholds
and increases the lower and/or higher oxygen stream thresholds for those of the reactors (21, 22, 23) that inquired higher oxygen stream thresholds under the condition that the total oxygen stream value is not exceeded.

28. Method according to claim 27, **characterized in that** the control unit (3) comprises a maximum oxygen stream value for at least one of the reactors (21, 22, 23) or reads the minimum oxygen stream value from this reactor (21, 22, 23), wherein the control unit (3) sets the lower and/or higher oxygen stream thresholds of the reactor (21, 22, 23) lower than the maximum oxygen stream of the reactor (21, 22, 23) and/or
that the control unit (3) comprises a minimum oxygen stream for at least one of the reactors (21, 22, 23) or reads the minimum oxygen stream value from this reactor (21, 22, 23), wherein the control unit (3) sets lower and/or higher oxygen stream thresholds of the reactor (21, 22, 23) to be higher than the minimum oxygen stream of the reactor (21, 22, 23).

## Patentansprüche

1. Kombiniertes Reaktorsystem (1) mit
mindestens zwei parallele Reaktoren (21, 22, 23), wobei jeder der Reaktoren (21, 22, 23) mit mindestens einem Reaktanten mit einer jeweiligen zeitabhängigen aktuellen Ist-Beschickung (211, 221, 231) beschickt wird, wobei sich die Reaktoren (21, 22, 23) folgendes teilen
- eine Gesamtbeschickung (4), wobei die Gesamtbeschickung (4) nicht alle Reaktoren (21, 22, 23) versorgen kann, die gleichzeitig mit voller Leistung laufen, und/oder
- ein gemeinsames Abgasnachbehandlungssystem (8), wobei das gemeinsame Abgasnachbehandlungssystem (8) die Abgase (81, 82, 83) aller Reaktoren (21, 22, 23), die gleichzeitig mit voller Leistung laufen, nicht behandeln kann, und
- eine Steuereinheit (3), die so konfiguriert ist, dass sie jedem der Reaktoren (21, 22, 23) jeweils mindestens eine Steuergröße (21, 22, 23) für den Reaktor (21, 22, 23) übermittelt;
wobei jede der Steuervariablen (31, 32, 33) ein Beschickungsziel (311, 321, 331) für den jeweiligen Reaktor (21, 22, 23) umfasst, welches ein Schwellenwert bezüglich der tatsächlichen Ist-Beschickung (211, 221, 231) des jeweiligen Reaktors (21, 22, 23) ist,
wobei die Reaktoren (21, 22, 23) selbstgesteuert sind und so konfiguriert sind, dass sie ihre Parameter (34, 35, 36, 211, 214, 221, 224, 231, 234) entsprechend ihren inneren Randbedingungen und der jeweiligen mindestens einen von der Steuereinheit (3) empfangenen Steuergröße (31, 32, 33) einstellen, wobei jeder Reaktor (21, 22, 23) so konfiguriert ist, dass er seine eigene Ist-Beschickung (211, 221, 231) unter der Bedingung einstellt, dass seine Ist-Beschickung (211, 221, 231) kleiner ist als das Beschickungsziel (311, 321, 331) für diesen Reaktor (21, 22, 23), und dass er seine Ist-Beschickung (211, 221, 231) maximiert und daher versucht, sein Beschickungsziel (311, 321, 331) zu erreichen,
wobei in der Steuereinheit (3) ein Gesamtzufuhrsoll als oberer Grenzwert gespeichert ist, wobei das Gesamtzufuhrsoll eine gewünschte Gesamtzufuhr der Reaktoren (21, 22, 23) angibt, die einen Gesamtdurchsatz der Reaktoren (21, 22, 23) bestimmt,
wobei die Steuereinheit (3) so konfiguriert ist, dass eine Summe der an die Reaktoren (21, 22, 23) übermittelten Beschickungsziele (311, 321, 331) kleiner oder gleich dem Gesamtzufuhrziel ist,
wobei die Steuereinheit (3) so konfiguriert ist, dass sie die folgenden Schritte ständig wiederholt:
- Ablesen der Ist-Beschickung (211, 221, 231) der mehreren Reaktoren (21, 22, 23) durch Empfangen von Werten der Ist-Beschickung (211, 221, 231) von untergeordneten, für die einzelnen Reaktoren (21, 22, 23) zuständigen Steuereinheiten oder durch Zugriff auf entsprechende Speicher solcher untergeordneter Steuereinheiten,
- für jeden der Reaktoren (21, 22, 23) das Interpretieren des jeweiligen Reaktors (21, 22, 23) in Abhängigkeit von der tatsächlichen Ist Beschickung (211, 221, 231) und dem Beschickungsziel (311, 321, 331) für den jeweiligen Reaktor (21, 22, 23) als Anforderung eines höheren, gleichen oder niedrigeren Beschickungsziels (311, 321, 331), und
- Verringern des Beschickungsziels (311, 321, 311) für diejenigen der Reaktoren (21, 22, 23), die ein niedrigeres Beschickungsziel (311, 321, 331) anfragen, und Erhöhen des Beschickungsziels (311, 321, 331) für diejenigen der Reaktoren (21, 22, 23), die ein höheres Beschickungsziel (311, 321, 331) anfragen, unter der Bedingung, dass die Summe der Beschickungsziele (311, 321, 331) für die Reaktoren (21, 22, 23) das Gesamtbeschickungsziel nicht übersteigt,
wobei die Steuereinheit (3) die Zufuhrziele (311, 321, 331) zwischen den Reaktoren (21, 22, 23) in Abhängigkeit von einer tatsächlichen Nutzung der Reaktoren (21, 22, 23) verschiebt, um die Gesamtleistung der Reaktoren (21, 22, 23) zu maximieren.

2. Kombiniertes Reaktorsystem (1) nach Anspruch 1, **dadurch gekennzeichnet, dass** die Steuereinheit (3) so konfiguriert ist, dass sie eine Differenz zwischen dem Beschickungsziel (311, 321, 331) und der Ist-Beschickung (211, 221, 231) jedes Reaktors (21, 22, 23) berechnet und den Reaktor (21, 22, 23) als nach einem niedrigeren Beschickungsziel (311, 321, 331) fragend interpretiert, wenn die Differenz größer ist als eine erste Differenz, die in der Steuereinheit (3) als ein erstes Beschickungs-Delta (313, 323, 333) gespeichert ist, und die Steuereinheit (3) interpretiert den Reaktor (21, 22, 23) als Anfrage nach einem höheren Beschickungsziel (311, 321, 331), wenn die berechnete Differenz zwischen dem Beschickungsziel (311, 321, 331) und der Ist-Beschickung (211, 221, 231) kleiner ist als eine zweite Differenz, die in der Steuereinheit (3) als ein zweites Beschickungs-Delta (312, 322, 332) gespeichert ist.

3. Kombiniertes Reaktorsystem (1) nach Anspruch 1, **dadurch gekennzeichnet, dass** die mindestens eine Steuergröße (31, 32, 33) einen unteren Schwellenwert bezüglich der tatsächlichen Beschickungsleistung des Reaktors (21, 22, 23) umfasst, und dass die Steuereinheit (3) dazu ausgebildet ist, eine Differenz zwischen dem unteren Schwellenwert und der tatsächlichen Beschickungsleistung jedes Reaktors (21, 22, 23) zu berechnen und eine Differenz auszuwerten, dass die Steuereinheit (3) so konfiguriert ist, dass sie eine Differenz zwischen dem unteren Schwellenwert und der tatsächlichen Zuführungsrate jedes Reaktors (21, 22, 23) berechnet und eine Differenz, die kleiner ist als eine erste in der Steuereinheit (3) gespeicherte Differenz, als ein erstes Zuführungsdelta als den Reaktor (21, 22, 23) interpretiert, der ein niedrigeres Zuführungsziel anfordert, und dass die Steuereinheit (3) so konfiguriert ist, dass sie eine Differenz zwischen dem Zuführungsziel und der tatsächlichen Zuführungsrate jedes Reaktors (21, 22, 23) berechnet und eine Differenz, die kleiner ist als eine zweite in der Steuereinheit (3) gespeicherte Differenz, als ein zweites Zuführungsdelta als den Reaktor (21, 22, 23) interpretiert, der ein höheres Zuführungsziel anfordert.

4. Kombiniertes Reaktorsystem (1) nach einem der vorhergehenden Ansprüche, **dadurch gekennzeichnet, dass** die Beschickungsziele (311, 321, 331) aller Reaktoren (21, 22, 23), die ein höheres Beschickungsziel (311, 321, 331) anfordern, so erhöht werden, dass die Summe aller Beschickungsziele (311, 321, 331) gleich dem gesamten Beschickungsziel ist.

5. Kombiniertes Reaktorsystem (1) nach Anspruch 4, **dadurch gekennzeichnet, dass** die Beschickungsziele (311, 321, 331) der Reaktoren (21, 22, 23), die ein höheres Beschickungsziel (311, 321, 331) anfordern, gleichmäßig erhöht werden.

6. Kombiniertes Reaktorsystem (1) nach einem der Ansprüche 1 bis 3, **dadurch gekennzeichnet, dass** das Beschickungsziel (311, 321, 331) um einen festen Schritt oder eine feste Rate erhöht und/oder verringert wird.

7. Kombiniertes Reaktorsystem (1) nach einem der vorhergehenden Ansprüche, **dadurch gekennzeichnet, dass** die Steuereinheit (3) eine maximale Zufuhr (212) für mindestens einen der mehreren Reaktoren (21, 22, 23) umfasst, wobei die Steuereinheit (3) so konfiguriert ist, dass sie das Beschickungsziel (311) des Reaktors (21) niedriger als die maximale Beschickung (212) des Reaktors (21) einstellt und/oder eine minimale Beschickung (213) für mindestens einen der Vielzahl von Reaktoren (21, 22, 23) umfasst, wobei das Beschickungsziel (311) des Reaktors (21) höher als die minimale Beschickung (213) des Reaktors (21) eingestellt ist.

8. Kombiniertes Reaktorsystem (1) nach einem der vorhergehenden Ansprüche, **dadurch gekennzeichnet, dass** die mindestens eine Regelgröße (31, 32, 33) eine untere Luftstromschwelle (315, 325, 335) und eine höhere Luftstromschwelle (314, 324, 334) umfasst und die Steuereinheit (3) einen Gesamtluftstromwert umfasst, wobei eine Summe der höheren Luftstromschwellenwerte (315, 325, 335) der Mehrzahl von Reaktoren (21, 22, 23) kleiner oder gleich dem Gesamtluftstromwert ist, wobei die Steuereinheit (3) konfiguriert ist, um für jeden Reaktor (21, 22, 23)
- einen tatsächlichen Luftstromwert (214, 224, 234) des jeweiligen Reaktors (21, 22, 23) zu lesen, den tatsächlichen Luftstromwert (214, 224, 234) mit dem niedrigeren und höheren Luftstromschwellenwert (314, 315, 324, 325, 334, 335) des Reaktors (21, 22, 23) zu vergleichen, indem die Differenzen berechnet werden,
- die Differenz zwischen der höheren Luftstromschwelle (314, 324, 334) und dem Luftstrom-Istwert (214, 224, 234), die kleiner als ein zweites Luft-Delta (316, 326, 336) ist, als Anfrage zur Erhöhung der Luftstromschwellen (314, 315, 324, 325, 334, 335) interpretieren, und
- die Differenz zwischen dem unteren Luftstrom-Schwellenwert (315, 325, 335) und dem Luftstrom-Istwert (214, 224, 234), die kleiner als ein erstes Luftstrom-Delta (317, 327, 337) ist, als Anfrage für eine Verringerung der Luftstrom-Schwellenwerte (314, 315, 324, 325, 334, 335) interpretiert,
und wobei die Steuereinheit (3) so konfiguriert ist, dass sie die niedrigeren und/oder die höheren Luftstromschwellenwerte (314, 315, 324, 325, 334, 335) für diejenigen der Reaktoren (21, 22, 23) verringert, die eine Verringerung der Luftstromschwellenwerte (314, 315, 324, 325, 334) angefordert haben, 335) und Erhöhung der niedrigeren und/oder höheren Luftstromschwellenwerte (314, 315, 324, 325, 334, 335) für diejenigen der Reaktoren, die eine Erhöhung der Luftstromschwellenwerte (314, 315, 324, 325, 334, 335) angefordert haben, unter der Bedingung, dass der Gesamtluftstromwert nicht überschritten wird.

9. Kombiniertes Reaktorsystem (1) nach Anspruch 8, **dadurch gekennzeichnet, dass** der Gesamtluftstromwert von einem maximalen Gasdurchsatz eines den mehreren Reaktoren (21, 22, 23) nachgeschalteten gemeinsamen Abgasnachbehandlungssystems (8) abhängt, wobei der Gesamtluftstromwert ein fester Wert ist oder weiter von einem Sauerstoffstromwert der Reaktoren (21, 22, 23) abhängig ist.

10. Kombiniertes Reaktorsystem (1) nach Anspruch 8 oder 9, **dadurch gekennzeichnet, dass** die Steuereinheit (3) einen maximalen Luftstromwert (215) für mindestens einen der Reaktoren (21, 22, 23) umfasst, wobei die Steuereinheit (3) so konfiguriert ist, dass sie die unteren und/oder oberen Luftstromschwellenwerte (314, 315) des Reaktors (21) niedriger als der maximale Luftstromwert (215) des Reaktors (21) einzustellen und/oder einen minimalen Luftstromwert (216) für mindestens einen der Reaktoren (21, 22, 23) umfasst, wobei die Steuereinheit (3) so konfiguriert ist, dass sie niedrigere und/oder höhere Luftstromschwellen (314, 315) des Reaktors (21) so einstellt, dass sie höher als der minimale Luftstromwert (216) des Reaktors (21) sind.

11. Kombiniertes Reaktorsystem (1) nach einem der Ansprüche 8 bis 10, **dadurch gekennzeichnet, dass** der untere Luftstromschwellenwert (315, 325, 335) eine vorbestimmte Differenz zu dem höheren Luftstromschwellenwert (314, 324, 334) für denselben Reaktor (21, 22, 23) und/oder einen vorbestimmten Faktor zwischen 0,6 und 0,95, vorzugsweise zwischen 0,7 und 0,9, insbesondere 0,8, aufweist.

12. Kombiniertes Reaktorsystem (1) nach einem der vorhergehenden Ansprüche, **dadurch gekennzeichnet, dass** für jeden der Reaktoren (21, 22, 23) die jeweilige mindestens eine Regelgröße (31, 32, 33) einen unteren und einen oberen Sauerstoffstromschwellenwert umfasst, wobei die Regeleinheit (3) einen Gesamtsauerstoffstromwert umfasst, wobei eine Summe der höheren Sauerstoffstromschwellenwerte der Mehrzahl der Reaktoren (21, 22, 23) kleiner oder gleich dem Gesamtsauerstoffstromwert ist,
dass die Steuereinheit (3) konfiguriert ist, um für jeden der Reaktoren (21, 22, 23)
- einen tatsächlichen Sauerstoffstromwert aus dem jeweiligen Reaktor auszulesen, den tatsächlichen Sauerstoffstromwert mit dem niedrigeren und höheren Sauerstoffstromschwellenwert des Reaktors (21, 22, 23) zu vergleichen, indem die Differenzen berechnet werden,
- die Differenz zwischen dem höheren Sauerstoffstrom-Schwellenwert und dem tatsächlichen Sauerstoffstromwert, die kleiner als ein erstes Sauerstoff-Delta ist, als eine Anfrage zur Erhöhung der Sauerstoffstrom-Schwellenwerte interpretieren und
- die Differenz zwischen dem niedrigeren Sauerstoffstrom-Schwellenwert und dem Sauerstoffstrom-Istwert, der kleiner als ein zweites Sauerstoff-Delta ist, als eine Anfrage zur Verringerung der Sauerstoffstrom-Schwellenwerte interpretieren,
und wobei die Steuereinheit (3) so konfiguriert ist, dass sie die niedrigeren und/oder höheren Sauerstoffstromschwellenwerte für diejenigen der Reaktoren (21, 22, 23), die niedrigere Sauerstoffstromschwellenwerte angefordert haben, verringert und die niedrigeren und/oder höheren Sauerstoffstromschwellenwerte für diejenigen der Reaktoren (21, 22, 23), die höhere Sauerstoffstromschwellenwerte angefordert haben, unter der Bedingung erhöht, dass der Gesamtsauerstoffstromwert nicht überschritten wird.

13. Kombiniertes Reaktorsystem (1) nach Anspruch 12, **dadurch gekennzeichnet, dass** die Steuereinheit (3) einen maximalen Sauerstoffstromwert für mindestens einen der Reaktoren (21, 22, 23) aufweist oder ausgebildet ist, den maximalen Sauerstoffstromwert aus dem Reaktor (21, 22, 23) auszulesen, wobei die Steuereinheit (3) ausgebildet ist, die unteren und/oder oberen Sauerstoffstromschwellen des Reaktors (21, 22, 23) niedriger als den maximalen Sauerstoffstromwert des Reaktors (21, 22, 23) einzustellen und/oder dass die Steuereinheit (3) einen minimalen Sauerstoffstromwert für mindestens einen der Reaktoren (21, 22, 23) umfasst oder konfiguriert ist, um den minimalen Sauerstoffstromwert von diesem Reaktor (21, 22, 23) abzulesen, wobei die Steuereinheit (3) konfiguriert ist, um niedrigere und/oder höhere Sauerstoffstrom-schwellenwerte des Reaktors (21, 22, 23) so einzustellen, dass sie höher sind als der minimale Sauerstoffstromwert des Reaktors (21, 22, 23).

14. Kombiniertes Reaktorsystem (1) nach einem der vorhergehenden Ansprüche, **dadurch gekennzeichnet, dass** mindestens einer der Reaktoren (21, 22, 23), insbesondere alle Reaktoren (21, 22, 23), Röstreaktoren, insbesondere Wirbelschichtreaktoren, sind.

15. Kombiniertes Reaktorsystem (1) nach einem der vorhergehenden Ansprüche, **dadurch gekennzeichnet, dass** das gemeinsame Abgasnachbehandlungssystem (8) einen maximalen Gasdurchsatz aufweist, der geringer ist als eine Summe maximaler Abgasleistungen der mehreren Reaktoren (21, 22, 23) und/oder die Reaktoren (21, 22, 23) eine gemeinsame Sauerstoffversorgung (5) mit einer maximalen Sauerstoffmenge aufweisen, die geringer ist als eine Summe der maximalen Bedarfe der mehreren Reaktoren (21, 22, 23).

16. Verfahren zur Steuerung eines kombinierten Reaktorsystems (1) mit mehreren parallelen Reaktoren (21, 22, 23) und einer Steuereinheit (3), wobei jeder der Reaktoren (21, 22, 23) mit mindestens einem Reaktanden mit einer jeweiligen, zeitabhängigen Ist-Beschickung (211, 221, 231) beschickt wird, wobei sich die Reaktoren (21, 22, 23)
- eine Gesamtbeschickung (4), wobei die Gesamtbeschickung (4) nicht alle Reaktoren (21, 22, 23), die gleichzeitig mit voller Leistung laufen, versorgen kann, und/oder
- ein gemeinsames Abgasnachbehandlungssystem (8), wobei das gemeinsame Abgasnachbehandlungssystem (8) die Abgase (81, 82, 83) aller Reaktoren (21, 22, 23), die gleichzeitig mit voller Leistung laufen, nicht behandeln kann,
wobei die Steuereinheit (3) jedem der Reaktoren (21, 22, 23) jeweils mindestens eine Steuergröße (31, 32, 33) für den Reaktor (21, 22, 23) mitteilt,
wobei jede der Steuervariablen (31, 32, 33) ein Beschickungsziel (311, 321, 331) für den jeweiligen Reaktor (21, 22, 23) umfasst, welches ein Schwellenwert bezüglich der tatsächlichen Beschickungsrate (211, 221, 231) des jeweiligen Reaktors (21, 22, 23) ist,
wobei die Reaktoren (21, 22, 23) selbstgesteuert sind und ihre Parameter (34, 35, 36, 211, 214, 221, 224, 231, 234) entsprechend ihren inneren Randbedingungen und der jeweiligen mindestens einen von der Steuereinheit (3) empfangenen Steuergröße (31, 32, 33) einstellen, wobei jeder Reaktor (21, 22, 23) seine eigene Ist-Beschickung (211, 221, 231) unter der Bedingung einstellt, dass sie kleiner ist als das Beschickungsziel (311, 321, 331) für diesen Reaktor (21, 22, 23) und seine Ist-Beschickung (211, 221, 231) maximiert und dafür versucht, sein Beschickungsziel (311, 321, 331) zu erreichen,
wobei die Steuereinheit (3) ein Gesamtzufuhrziel umfasst, wobei das Gesamtzufuhrziel eine gewünschte Gesamtzufuhr der Reaktoren (21, 22, 23) angibt, die einen Gesamtdurchsatz der Reaktoren (21, 22, 23) bestimmt,
wobei die Steuereinheit (3) die jeweiligen an die Reaktoren (21, 22, 23) übermittelten Beschickungsziele (311, 321, 331) so einstellt, dass eine Summe der Beschickungsziele (311, 321, 331) der mehreren Reaktoren (21, 22, 23) kleiner oder gleich dem Gesamtziel ist,
wobei die Steuereinheit (3) ständig die folgenden Schritte wiederholt:
- Ablesen der Ist-Beschickungsraten (211, 221, 231) der mehreren Reaktoren (21, 22, 23) durch Empfangen von Werten der Ist-Beschickungsraten (211, 221, 231) von untergeordneten, für die einzelnen Reaktoren (21, 22, 23) zuständigen Steuereinheiten oder durch Zugriff auf entsprechende Speicher solcher untergeordneter Steuereinheiten,
- für jeden der Reaktoren (21, 22, 23) die tatsächliche Zuführungsrate (211, 221, 231) des jeweiligen Reaktors (21, 22, 23) mit dem Beschickungsziel (311, 321, 331) für den jeweiligen Reaktor (21, 22, 23) vergleicht und auf der Grundlage des Vergleichs den jeweiligen Reaktor (21, 22, 23) so interpretiert, dass er ein höheres, das gleiche oder ein niedrigeres Beschickungsziel (311, 321, 331) anfordert,
- Verringern des Beschickungsziels (311, 321, 331) für jeden der Reaktoren (21, 22, 23), der ein niedrigeres Beschickungsziel (311, 321, 331) angefordert hat, und Erhöhen des Beschickungsziels (311, 321, 331) für jeden der Reaktoren (21, 22, 23), der ein höheres Beschickungsziel (311, 321, 331) angefordert hat, unter der Bedingung, dass das Gesamtziel nicht überschritten wird,
wobei die Steuereinheit (3) die Beschickungsziele (311, 321, 331) zwischen den Reaktoren (21, 22, 23) in Abhängigkeit von einer tatsächlichen Nutzung der Reaktoren (21, 22, 23) verschiebt, um die Gesamtleistung der Reaktoren (21, 22, 23) zu maximieren.

17. Verfahren nach Anspruch 16, **dadurch gekennzeichnet, dass** die Steuereinheit (3) eine Differenz zwischen dem Beschickungsziel (311, 321, 331) und der tatsächlichen Zuführungsrate (211, 221, 231) jedes Reaktors (21, 22, 23) berechnet und den Reaktor (21, 22, 23) als nach einem niedrigeren Beschickungsziel (311, 321, 331) fragend interpretiert, wenn die berechnete Differenz größer ist als eine erste Differenz, die in der Steuereinheit (3) als ein erstes Beschickungsdelta (313, 323, 333) gespeichert ist, und die Steuereinheit (3) interpretiert den Reaktor (21, 22, 23) als Anfrage nach einem höheren Beschickungsziel (311, 321, 331), wenn die berechnete Differenz zwischen dem Beschickungsziel (311, 321, 331) und der tatsächlichen Beschickungsrate (211, 221, 231) kleiner ist als eine zweite Differenz, die in der Steuereinheit (3) als ein zweites Beschickungsdelta (312, 322, 332) gespeichert ist.

18. Verfahren nach Anspruch 16 oder 17, **dadurch gekennzeichnet, dass** die mindestens eine Regelgröße (31, 32, 33) einen unteren Schwellenwert bezüglich der tatsächlichen Beschickungsleistung des Reaktors (21, 22, 23) umfasst, und dass die Steuereinheit (3) eine Differenz zwischen dem unteren Schwellenwert und der tatsächlichen Beschickungsleistung jedes Reaktors (21, 22, 23) berechnet und eine Differenz auswertet, dass die Steuereinheit (3) eine Differenz zwischen dem unteren Schwellenwert und der tatsächlichen Zuführungsrate jedes Reaktors (21, 22, 23) berechnet und eine Differenz, die kleiner ist als eine erste in der Steuereinheit (3) gespeicherte Differenz, als ein erstes Zuführungsdelta als den Reaktor (21, 22, 23) interpretiert, der ein niedrigeres Zuführungsziel anfordert, und dass die Steuereinheit (3) eine Differenz zwischen dem Zuführungsziel und der tatsächlichen Zuführungsrate jedes Reaktors (21, 22, 23) berechnet und eine Differenz, die kleiner ist als eine zweite in der Steuereinheit (3) gespeicherte Differenz, als ein zweites Zuführungsdelta als den Reaktor (21, 22, 23) interpretiert, der ein höheres Zuführungsziel anfordert.

19. Verfahren nach einem der Ansprüche 16 bis 18, **dadurch gekennzeichnet, dass** die Beschickungsziele (311, 321, 331) aller Reaktoren (21, 22, 23), die ein höheres Beschickungsziel (311, 321, 331) anfordern, so erhöht werden, dass die Summe aller Beschickungsziele (311, 321, 331) gleich dem gesamten Beschickungsziel ist.

20. Verfahren nach einem der Ansprüche 16 bis 19, **dadurch gekennzeichnet, dass** die Zufuhrziele (311, 321, 331) der Reaktoren (21, 22, 23), die ein höheres Zufuhrziel (311, 321, 331) anfordern, gleichmäßig erhöht werden.

21. Verfahren nach einem der Ansprüche 16 bis 20, **dadurch gekennzeichnet, dass** das Beschickungsziel (311, 321, 331) um einen festen Schritt oder eine feste Rate erhöht und/oder verringert wird.

22. Verfahren nach einem der Ansprüche 16 bis 21, **dadurch gekennzeichnet, dass** die Steuereinheit (3) eine maximale Beschickung (212) für mindestens einen der mehreren Reaktoren (21, 22, 23) umfasst, wobei die Steuereinheit (3) das Beschickungsziel (311) des Reaktors (21) niedriger als die maximale Beschickung (212) des Reaktors (21) einstellt und/oder eine minimale Beschickung (213) für mindestens einen der Vielzahl von Reaktoren (21, 22, 23) umfasst, wobei das Beschickungsziel (311) des Reaktors (21) höher als die minimale Beschickung (213) des Reaktors (21) eingestellt wird.

23. Verfahren nach einem der Ansprüche 16 bis 22, **dadurch gekennzeichnet, dass** die mindestens eine Regelgröße (31, 32, 33) eine untere Luftstromschwelle (315, 325, 335) und eine höhere Luftstromschwelle (314, 324, 334) umfasst und dass die Regeleinheit (3) einen Gesamtluftstromwert umfasst, wobei eine Summe der höheren Luftstromschwellenwerte (314, 324, 334) der Mehrzahl von Reaktoren (21, 22, 23) kleiner oder gleich dem Gesamtluftstromwert ist, wobei die Steuereinheit (3) für jeden Reaktor (21, 22, 23)
- einen tatsächlichen Luftstromwert (214, 224, 234) des jeweiligen Reaktors (21, 22, 23) ausliest, den tatsächlichen Luftstromwert (214, 224, 234) mit den niedrigeren und höheren Luftstromschwellenwerten (314, 315, 324, 325, 334, 335) des Reaktors (21, 22, 23) vergleicht, indem sie die Differenzen berechnet,
- die Differenz zwischen dem höheren Luftstrom-Schwellenwert (314, 324, 334) und dem Luftstrom-Istwert (214, 224, 234), die kleiner als ein zweites Luft-Delta (316, 326, 336) ist, als eine Anfrage zur Erhöhung der Luftstrom-Schwellenwerte (314, 315, 324, 325, 334, 335) interpretiert und
- die Differenz zwischen der unteren Luftstromschwelle (315, 325, 335) und dem Luftstrom-Istwert (214, 224, 234), die kleiner als ein erstes Luftdelta (317, 327, 337) ist, als Anfrage für eine Verringerung der Luftstromschwellen (314, 315, 324, 325, 334, 335) interpretiert, und
wobei die Steuereinheit (3) die niedrigeren und/oder höheren Luftstromschwellen (314, 315, 324, 325, 334, 335) für diejenigen der Reaktoren (21, 22, 23), die eine Verringerung der Luftstromschwellen (314, 315, 324, 334, 335) angefordert haben, verringert und die niedrigeren und/oder höheren Luftstromschwellen (314, 315, 324, 325, 334, 335) für diejenigen der Reaktoren (21, 22, 23), die eine Verringerung der Luftstromschwellen (314, 315, 324, 334, 335) angefordert haben, erhöht, 335) und erhöht die niedrigeren und/oder höheren Luftstromschwellenwerte (314, 315, 324, 334, 335) für diejenigen der Reaktoren (21, 22, 23), die eine Erhöhung der Luftstromschwellenwerte (314, 315, 324, 325, 334, 335) angefordert haben, unter der Bedingung, dass der Gesamtluftstromwert nicht überschritten wird.

24. Verfahren nach Anspruch 23, **dadurch gekennzeichnet, dass** der Gesamtluftstromwert von einem maximalen Gasdurchsatz des den mehreren Reaktoren (21, 22, 23) nachgeschalteten gemeinsamen Abgasnachbehandlungssystems (8) abhängt, wobei der Gesamtluftstromwert ein fester Wert ist oder weiter von einem Sauerstoffstromwert der Reaktoren (21, 22, 23) abhängt.

25. Verfahren nach Anspruch 23 oder 24, **dadurch gekennzeichnet, dass** die Steuereinheit (3) einen maximalen Luftstromwert (215) für mindestens einen der Reaktoren (21, 22, 23) aufweist, wobei die Steuereinheit (3) die unteren und/oder oberen Luftstromschwellenwerte (314, 315) des Reaktors (21) niedriger als den maximalen Luftstromwert (215) des Reaktors (21) einstellt und/oder einen minimalen Luftstromwert (216) für mindestens einen der Reaktoren (21, 22, 23) umfasst, wobei die Steuereinheit (3) niedrigere und/oder höhere Luftstromschwellenwerte (314, 315) des Reaktors (21) so einstellt, dass sie höher sind als der minimale Luftstromwert (216) des Reaktors (21).

26. Verfahren nach einem der Ansprüche 23 bis 25, **dadurch gekennzeichnet, dass** der untere Luftstromschwellenwert (315, 325, 335) eine vorgegebene Differenz zu dem höheren Luftstromschwellenwert (314, 324, 334) für denselben Reaktor (21, 22, 23) und/oder einen vorgegebenen Faktor zwischen 0,6 und 0,95, vorzugsweise zwischen 0,7 und 0,9, insbesondere 0,8, aufweist.

27. Verfahren nach einem der Ansprüche 16 bis 26, **dadurch gekennzeichnet, dass** die jeweilige mindestens eine Steuergröße (31, 32, 33) für jeden der Reaktoren (21, 22, 23) einen unteren und einen oberen Sauerstoffstromschwellenwert umfasst, wobei die Steuereinheit (3) einen Gesamtsauerstoffstromwert umfasst, wobei eine Summe der höheren Sauerstoffstromschwellenwerte der mehreren Reaktoren (21, 22, 23) kleiner oder gleich dem Gesamtsauerstoffstromwert ist,
dass die Steuereinheit (3) für jeden der Reaktoren (21, 22, 23)
- einen tatsächlichen Sauerstoffstromwert aus dem jeweiligen Reaktor (21, 22, 23) ausliest, den tatsächlichen Sauerstoffstromwert mit dem niedrigeren und höheren Sauerstoffstromgrenzwert des Reaktors (21, 22, 23) vergleicht, indem sie die Differenzen berechnet,
- die Differenz zwischen dem höheren Sauerstoffstromschwellenwert und dem tatsächlichen Sauerstoffstromwert, die kleiner als ein erstes Sauerstoff-Delta ist, als eine Anfrage zur Erhöhung der Sauerstoffstromschwellenwerte interpretiert und
- die Differenz zwischen dem niedrigeren Sauerstoffstrom-Schwellenwert und dem Sauerstoffstrom-Istwert, der kleiner als ein zweites Sauerstoff-Delta ist, als eine Anfrage zur Verringerung der Sauerstoffstrom-Schwellenwerte interpretiert, und wobei die Steuereinheit (3) die niedrigeren und/oder höheren Sauerstoffstromschwellenwerte für diejenigen der Reaktoren (21, 22, 23) herabsetzt, die niedrigere Sauerstoffstromschwellenwerte angefordert haben.
und die niedrigeren und/oder höheren Sauerstoffstrom-Schwellenwerte für diejenigen der Reaktoren (21, 22, 23) erhöht, die höhere Sauerstoffstrom-Schwellenwerte angefordert haben, unter der Bedingung, dass der Gesamtsauerstoffstromwert nicht überschritten wird.

28. Verfahren nach Anspruch 27, **dadurch gekennzeichnet, dass** die Steuereinheit (3) einen maximalen Sauerstoffstromwert für mindestens einen der Reaktoren (21, 22, 23) umfasst oder den minimalen Sauerstoffstromwert aus diesem Reaktor (21, 22, 23) ausliest, wobei die Steuereinheit (3) die unteren und/oder oberen Sauerstoffstromschwellen des Reaktors (21, 22, 23) niedriger als den maximalen Sauerstoffstrom des Reaktors (21, 22, 23) setzt und/oder dass die Steuereinheit (3) einen minimalen Sauerstoffstrom für mindestens einen der Reaktoren (21, 22, 23) umfasst oder den minimalen Sauerstoffstromwert aus diesem Reaktor (21, 22, 23) ausliest, wobei die Steuereinheit (3) niedrigere und/oder höhere Sauerstoffstromschwellenwerte des Reaktors (21, 22, 23) höher einstellt als den minimalen Sauerstoffstrom des Reaktors (21, 22, 23).

## Revendications

1. Système de réacteur combiné (1) comprenant au moins deux réacteurs parallèles (21, 22, 23), chacun des réacteurs (21, 22, 23) étant alimenté par au moins un réactif avec un taux d'alimentation réel respectif dépendant du temps (211, 221, 231), dans lequel les réacteurs (21, 22, 23) partagent
- un approvisionnement alimentaire total (4), dans lequel l'approvisionnement alimentaire total (4) ne peut pas alimenter tous les réacteurs (21, 22, 23) fonctionnant à pleine capacité en même temps, et/ou
- un système commun de post-traitement des gaz d'échappement (8), dans lequel le système commun de post-traitement des gaz d'échappement (8) ne peut pas traiter les gaz d'échappement (81, 82, 83) de tous les réacteurs (21, 22, 23) fonctionnant à pleine capacité en même temps, et
une unité de commande (3) configurée pour communiquer à chacun des réacteurs (21, 22, 23), respectivement, au moins une variable de commande (21, 22, 23) pour le réacteur (21, 22, 23) ;
dans lequel chacune des variables de commande (31, 32, 33) comprend une cible d'alimentation (311, 321, 331) pour le réacteur respectif (21, 22, 23), qui est une valeur seuil - concernant le taux d'alimentation réel (211, 221, 231) dudit réacteur respectif (21, 22, 23), dans lequel les réacteurs (21, 22, 23) sont autocontrôlés et sont configurés pour ajuster leurs paramètres (34, 35, 36, 211, 214, 221, 224, 231, 234) en fonction de leurs conditions limites internes et d'au moins une variable de commande (31, 32, 33) reçue de l'unité de commande (3), dans lequel chaque réacteur (21, 22, 23) est configuré pour ajuster son propre débit d'alimentation réel (211, 221, 231) à la condition que son débit d'alimentation réel (211, 221, 231) soit inférieur à la cible d'alimentation (311, 321, 331) pour ce réacteur (21, 22, 23) et pour maximiser son débit d'alimentation réel (211, 221, 231) et ainsi essayer d'atteindre sa cible d'alimentation (311, 321, 331),
dans lequel une cible d'alimentation totale est stockée dans l'unité de commande (3) en tant que valeur limite supérieure, dans lequel la cible d'alimentation totale indique un approvisionnement alimentaire total souhaité des réacteurs (21, 22, 23), ce qui détermine un débit total des réacteurs (21, 22, 23),
dans lequel l'unité de commande (3) est configurée de manière à ce qu'une somme des objectifs d'alimentation (311, 321, 331) communiqués aux réacteurs (21, 22, 23) soit inférieure ou égale à la cible d'alimentation totale,
dans lequel l'unité de commande (3) est configurée pour répéter constamment les étapes consistant à :
- lire les débits d'alimentation réels (211, 221, 231) de la pluralité de réacteurs (21, 22, 23) en recevant les valeurs des débits d'alimentation réels (211, 221, 231) à partir des unités de commande subordonnées responsables des réacteurs individuels (21, 22, 23) ou en accédant aux mémoires correspondantes de ces unités de commande subordonnées,
- pour chacun des réacteurs (21, 22, 23), interpréter le réacteur respectif (21, 22, 23), en fonction du débit d'alimentation réel (211, 221, 231) et de la cible d'alimentation (311, 321 331) pour le réacteur respectif (21, 22, 23), en demandant une cible d'alimentation (311, 321, 331) plus élevée, identique ou plus basse, et
- diminuer la cible d'alimentation (311, 321, 311) pour ceux des réacteurs (21, 22, 23) qui demandent une cible d'alimentation inférieure (311, 321, 331) et augmenter la cible d'alimentation (311, 321, 331) pour ceux des réacteurs (21, 22, 23) qui demandent une cible d'alimentation supérieure (311, 321, 331) à la condition que la somme des objectifs d'alimentation (311, 321, 331) pour les réacteurs (21, 22, 23) n'excède pas la cible d'alimentation totale,
dans lequel l'unité de commande (3) déplace les cibles d'alimentation (311, 321, 331) entre les réacteurs (21, 22, 23) en fonction de l'utilisation réelle des réacteurs (21, 22, 23) afin de maximiser l'utilisation totale des réacteurs (21, 22, 23).

2. Système de réacteur combiné (1) selon la revendication 1, **caractérisé en ce que** l'unité de commande (3) est configurée pour calculer une différence entre la cible d'alimentation (311, 321, 331) et le débit d'alimentation réel (211, 221, 231) de chaque réacteur (21, 22, 23) et interprète le réacteur (21, 22, 23) en demandant une cible d'alimentation inférieure (311, 321, 331), lorsque la différence est plus grande qu'une première différence stockée dans l'unité de commande (3) en tant que premier delta d'alimentation (313, 323, 333), et l'unité de commande (3) interprète le réacteur (21, 22, 23) en demandant une cible d'alimentation plus élevé (311, 321, 331), lorsque la différence calculée entre la cible d'alimentation (311, 321, 331) et le débit d'alimentation réel (211, 221, 231) est inférieure à une deuxième différence stockée dans l'unité de commande (3) en tant que deuxième delta d'alimentation (312, 322, 332).

3. Système de réacteur combiné (1) selon la revendication 1, **caractérisé en ce que** l'au moins une variable de commande (31, 32, 33) comprend une valeur seuil inférieure concernant le débit d'alimentation réel du réacteur (21, 22, 23), et **en ce que** l'unité de commande (3) est configurée pour calculer une différence entre la valeur seuil inférieure et le débit d'alimentation réel de chaque réacteur (21, 22, 23) et interpréter une différence, qui est inférieure à une première différence stockée dans l'unité de commande (3) en tant que premier delta d'alimentation, le réacteur (21, 22, 23) demandant une cible d'alimentation inférieure, et que l'unité de commande (3) est configurée pour calculer une différence entre la cible d'alimentation et le débit d'alimentation réel de chaque réacteur (21, 22, 23) et interpréter une différence qui est inférieure à une deuxième différence stockée dans l'unité de commande (3) en tant que deuxième delta d'alimentation, le réacteur (21, 22, 23) demandant une cible d'alimentation plus élevé.

4. Système de réacteur combiné (1) selon l'une quelconque des revendications précédentes, **caractérisé en ce que** les objectifs d'alimentation (311, 321, 331) de tous les réacteurs (21, 22, 23) demandant une cible d'alimentation plus élevée (311, 321, 331) sont augmentés de telle sorte que la somme de tous les objectifs d'alimentation (311, 321, 331) soit égale à la cible d'alimentation totale.

5. Système de réacteur combiné (1) selon la revendication 4, **caractérisé en ce que** les objectifs d'alimentation (311, 321, 331) des réacteurs (21, 22, 23) demandant une cible d'alimentation plus élevée (311, 321, 331) sont augmentés uniformément.

6. Système de réacteur combiné (1) selon l'une des revendications 1 à 3, **caractérisé en ce que** la cible d'alimentation (311, 321, 331) est augmentée et/ou diminuée par un pas ou un taux fixe.

7. Système de réacteur combiné (1) selon l'une quelconque des revendications précédentes, **caractérisé en ce que** l'unité de commande (3) comprend une alimentation maximale (212) pour au moins l'un de la pluralité de réacteurs (21, 22, 23), dans lequel l'unité de commande (3) est configurée pour fixer la cible d'alimentation (311) du réacteur (21) à un niveau inférieur à l'alimentation maximale (212) du réacteur (21) et/ou comprend une alimentation minimale (213) pour au moins l'un de la pluralité de réacteurs (21, 22, 23), dans lequel la cible d'alimentation (311) du réacteur (21) est fixée à un niveau supérieur à l'alimentation minimale (213) du réacteur (21).

8. Système de réacteur combiné (1) selon l'une quelconque des revendications précédentes, **caractérisé en ce que** l'au moins une variable de commande (31, 32, 33) comprend un seuil inférieur de flux d'air (315, 325, 335) et un seuil supérieur de flux d'air (314, 324, 334) et l'unité de commande (3) comprend une valeur totale de flux d'air, dans lequel une somme des seuils supérieurs de flux d'air (315, 325, 335) de la pluralité de réacteurs (21, 22, 23) est inférieure ou égale à la valeur totale de flux d'air, dans lequel l'unité de commande (3) est configurée pour, pour chaque réacteur (21, 22, 23),
- lire une valeur réelle du flux d'air (214, 224, 234) du réacteur respectif (21, 22, 23), comparer la valeur réelle du flux d'air (214, 224, 234) au seuil inférieur et supérieur du flux d'air (314, 315, 324, 325, 334, 335) du réacteur (21, 22, 23) en calculant les différences,
- interpréter la différence entre le seuil supérieur du flux d'air (314, 324, 334) et la valeur réelle du flux d'air (214, 224, 234) étant inférieure à un deuxième delta d'air (316, 326, 336) comme une demande d'augmentation des seuils du flux d'air (314, 315, 324, 325, 334, 335), et
- interpréter la différence entre le seuil inférieur du flux d'air (315, 325, 335) et la valeur réelle du flux d'air (214, 224, 234) inférieure à un premier delta d'air (317, 327, 337) comme une demande de diminution des seuils du flux d'air (314, 315, 324, 325, 334, 335),
et dans lequel l'unité de commande (3) est configurée pour diminuer les seuils de flux d'air inférieurs et/ou supérieurs (314, 315, 324, 325, 334, 335) pour ceux des réacteurs (21, 22, 23) qui ont demandé une diminution des seuils de flux d'air (314, 315, 324, 325, 334, 335) et augmenter les seuils inférieurs et/ou supérieurs du flux d'air (314, 315, 324, 325, 334, 335) pour ceux des réacteurs qui ont demandé une augmentation seuils du flux d'air (314, 315, 324, 325, 334, 335) à la condition que la valeur totale du flux d'air ne soit pas dépassée.

9. Système de réacteur combiné (1) selon la revendication 8, **caractérisé en ce que** la valeur totale du flux d'air dépend d'un débit maximal de gaz d'un système commun de post-traitement des gaz d'échappement (8) placé après la pluralité de réacteurs (21, 22, 23), dans lequel la valeur totale du flux d'air est une valeur fixe ou dépend en outre d'une valeur du flux d'oxygène des réacteurs (21, 22, 23).

10. Système de réacteur combiné (1) selon la revendication 8 ou la revendication 9, **caractérisé en ce que** l'unité de commande (3) comprend une valeur maximale de flux d'air (215) pour au moins un des réacteurs (21, 22, 23), dans lequel l'unité de commande (3) est configurée pour fixer les seuils de flux d'air inférieurs et/ou supérieurs (314, 315) du réacteur (21) inférieurs à la valeur maximale de flux d'air (215) du réacteur (21) et/ou comprend une valeur minimale de flux d'air (216) pour au moins un des réacteurs (21, 22, 23),
dans lequel l'unité de commande (3) est configurée pour définir des seuils de flux d'air inférieurs et/ou supérieurs (314, 315) du réacteur (21) afin qu'ils soient supérieurs à la valeur minimale de flux d'air (216) du réacteur (21).

11. Système de réacteur combiné (1) selon l'une quelconque des revendications 8 à 10, **caractérisé en ce que** le seuil inférieur du flux d'air (315, 325, 335) présente une différence prédéterminée par rapport au seuil supérieur du flux d'air (314, 324, 334) pour le même réacteur (21, 22, 23) et/ou un facteur prédéterminé compris entre 0,6 et 0,95, de préférence compris entre 0,7 et 0,9, en particulier 0,8.

12. Système de réacteur combiné (1) selon l'une quelconque des revendications précédentes, **caractérisé en ce que**, pour chacun des réacteurs (21, 22, 23), l'au moins une variable de commande respective (31, 32, 33) comprend un seuil inférieur et un seuil supérieur de flux d'oxygène, dans lequel l'unité de commande (3) comprenant une valeur de flux d'oxygène total,
dans lequel une somme des seuils de flux d'oxygène supérieurs de la pluralité de réacteurs (21, 22, 23) est inférieure ou égale à la valeur totale du flux d'oxygène pour laquelle l'unité de commande (3) est configurée pour, pour chacun des réacteurs (21, 22, 23),
- lire une valeur réelle du flux d'oxygène provenant du réacteur respectif, comparer la valeur réelle du flux d'oxygène aux seuils inférieur et supérieur du flux d'oxygène du réacteur (21, 22, 23) en calculant les différences,
- interpréter la différence entre le seuil de flux d'oxygène le plus élevé et la valeur réelle du flux d'oxygène inférieure à un premier delta d'oxygène comme une demande d'augmentation des seuils de flux d'oxygène et
- interpréter la différence entre le seuil inférieur du flux d'oxygène et la valeur réelle du flux d'oxygène qui est inférieure à un deuxième delta d'oxygène comme une demande de diminution des seuils du flux d'oxygène,
et dans lequel l'unité de commande (3) est configurée pour diminuer les seuils de flux d'oxygène inférieurs et/ou supérieurs pour ceux des réacteurs (21, 22, 23) qui ont demandé des seuils de flux d'inférieurs et pour augmenter les seuils de flux d'oxygène inférieurs et/ou supérieurs pour ceux des réacteurs (21, 22, 23) qui ont demandé des seuils de flux d'oxygène supérieurs à la condition que la valeur totale du flux d'oxygène ne soit pas dépassée.

13. Système de réacteur combiné (1) selon la revendication 12, **caractérisé en ce que** l'unité de commande (3) comprend une valeur maximale de flux d'oxygène pour au moins un des réacteurs (21, 22, 23) ou est configurée pour lire la valeur maximale de flux d'oxygène du réacteur (21, 22, 23), dans lequel l'unité de commande (3) est configurée pour fixer les seuils inférieurs et/ou supérieurs de flux d'oxygène du réacteur (21, 22, 23) inférieurs à la valeur maximale de flux d'oxygène du réacteur (21, 22, 23) et/ou
**en ce que** l'unité de commande (3) comprend une valeur minimale de flux d'oxygène pour au moins un des réacteurs (21, 22, 23) ou est configurée pour lire la valeur minimale de flux d'oxygène de ce réacteur (21, 22, 23), dans lequel l'unité de commande (3) étant configurée pour fixer des seuils de flux d'oxygène inférieurs et/ou supérieurs du réacteur (21, 22, 23) afin qu'ils soient supérieurs à la valeur minimale de flux d'oxygène du réacteur (21, 22, 23).

14. Système de réacteur combiné (1) selon l'une quelconque des revendications précédentes, **caractérisé en ce qu'**au moins un des réacteurs (21, 22, 23), en particulier tous les réacteurs (21, 22, 23), sont des réacteurs de torréfaction, en particulier des réacteurs à lit fluidisé.

15. Système de réacteur combiné (1) selon l'une quelconque des revendications précédentes, **caractérisé en ce que** le système commun de post-traitement des gaz d'échappement (8) a un débit maximal de gaz inférieur à la somme des débits maximaux de gaz d'échappement de pluralité de réacteurs (21, 22, 23) et/ou les réacteurs (21, 22, 23) ont une alimentation commune en oxygène (5) avec un volume maximal d'oxygène inférieur à la somme des demandes maximales de la pluralité de réacteurs (21, 22, 23).

16. Procédé de commande d'un système de réacteur combiné (1), selon l'une quelconque des revendications précédentes, comprenant une pluralité de réacteurs parallèles (21, 22, 23) et une unité de commande (3), chacun des réacteurs (21, 22, 23) étant alimenté par au moins un réactif avec un taux d'alimentation réel respectif dépendant du temps (211, 221, 231), dans lequel les réacteurs (21, 22, 23) partagent
- un approvisionnement alimentaire total (4), dans lequel l'approvisionnement alimentaire total (4) ne peut pas alimenter tous les réacteurs (21, 22, 23) fonctionnant à pleine capacité en même temps, et/ou
- un système commun de post-traitement des gaz d'échappement (8), dans lequel le système commun de post-traitement des gaz d'échappement (8) ne peut pas traiter les gaz d'échappement (81, 82, 83) de tous les réacteurs (21, 22, 23) fonctionnant à pleine capacité en même temps,
dans lequel l'unité de commande (3) communique, à chacun des réacteurs (21, 22, 23), respectivement au moins une variable de commande (31, 32, 33) pour le réacteur (21, 22, 23),
dans lequel chacune des variables de commande (31, 32, 33) comprend une cible d'alimentation (311, 321, 331) pour le réacteur respectif (21, 22, 23), qui est une valeur seuil concernant le taux d'alimentation réel (211, 221, 231) dudit réacteur respectif (21, 22, 23), dans lequel les réacteurs (21, 22, 23) sont autocontrôlés et ajustent leurs paramètres (34, 35, 36, 211, 214, 221, 224, 231, 234) en fonction de leurs conditions limites internes et d'au moins une variable de commande (31, 32, 33) reçue de l'unité de commande (3), dans lequel chaque réacteur (21, 22, 23) ajuste son propre débit d'alimentation réel (211, 221, 231) à condition qu'il soit inférieur à la cible d'alimentation (311, 321, 331) pour ce réacteur (21, 22, 23) et maximise son débit d'alimentation réel (211, 221, 231) et tente ainsi d'atteindre sa cible d'alimentation (311, 321, 331),
dans lequel l'unité de commande (3) comprend une cible d'alimentation totale, dans lequel la cible d'alimentation totale indique un approvisionnement alimentaire total souhaité des réacteurs (21, 22, 23), qui détermine un débit total des réacteurs (21, 22, 23),
dans lequel l'unité de commande (3) fixe les objectifs d'alimentation respectifs (311, 321, 331) communiqués aux réacteurs (21, 22, 23) de manière à ce que la somme des objectifs d'alimentation (311, 321, 331) de la pluralité de réacteurs (21, 22, 23) soit inférieure ou égale à la cible d'alimentation totale,
dans lequel l'unité de commande (3) répète constamment les étapes consistant à :
- lire les débits d'alimentation réels (211, 221, 231) de la pluralité de réacteurs (21, 22, 23) en recevant les valeurs des débits d'alimentation réels (211, 221, 231) des unités de commande subordonnées responsables des réacteurs individuels (21, 22, 23) ou en accédant aux mémoires correspondantes de ces unités de commande subordonnées,
- comparer, pour chacun des réacteurs (21, 22, 23), le débit d'alimentation réel (211, 221, 231) du réacteur respectif (21, 22, 23) avec la cible d'alimentation (311, 321, 331) pour ledit réacteur respectif (21, 22, 23) et, sur la base de la comparaison, interpréter ledit réacteur respectif (21, 22, 23) en demandant une cible d'alimentation (311, 321, 331) plus élevée, identique ou plus basse,
- diminuer la cible d'alimentation (311, 321, 331) pour chacun des réacteurs (21, 22, 23) ayant demandé une cible d'alimentation inférieure (311, 321, 331) et augmenter la cible d'alimentation (311, 321, 331) pour chacun des réacteurs (21, 22, 23) ayant demandé une cible d'alimentation supérieure (311, 321, 331) à la condition que la cible d'alimentation totale ne soit pas dépassée,
dans lequel l'unité de commande (3) déplace les cibles d'alimentation (311, 321, 331) entre les réacteurs (21, 22, 23) en fonction de l'utilisation réelle des réacteurs (21, 22, 23) afin de maximiser le rendement total des réacteurs (21, 22, 23).

17. Procédé selon la revendication 16, **caractérisé en ce que** l'unité de commande (3) calcule une différence entre la cible d'alimentation (311, 321, 331) et le débit d'alimentation réel (211, 221, 231) de chaque réacteur (21, 22, 23) et interprète le réacteur (21, 22, 23) en demandant une cible d'alimentation inférieur (311, 321, 331), lorsque la différence calculée est supérieure à une première différence stockée dans l'unité de commande (3) comme un premier delta d'alimentation (313, 323, 333), et l'unité de commande (3) interprète le réacteur (21, 22, 23) en demandant une cible d'alimentation plus élevée (311, 321, 331), en demandant une cible d'alimentation plus élevée (311, 321, 331), lorsque la différence calculée entre la cible d'alimentation (311, 321, 331) et le débit d'alimentation réel (211, 221, 231) est inférieure à une deuxième différence stockée dans l'unité de commande (3) en tant que deuxième delta d'alimentation (312, 322, 332).

18. Procédé selon la revendication 16 ou la revendication 17, **caractérisé en ce que** l'au moins une variable de commande (31, 32, 33) comprend une valeur seuil inférieure concernant le débit d'alimentation réel du réacteur (21, 22, 23), et **en ce que** l'unité de commande (3) calcule une différence entre la valeur seuil inférieure et le débit d'alimentation réel de chaque réacteur (21, 22, 23) et interprète une différence, qui est inférieure à une première différence stockée dans l'unité de commande (3) en tant que premier delta d'alimentation, le réacteur (21, 22, 23) demandant une cible d'alimentation inférieure, et que l'unité de commande (3) calcule une différence entre la cible d'alimentation et le débit d'alimentation réel de chaque réacteur (21, 22, 23) et interprète une différence qui est inférieure à une deuxième différence stockée dans l'unité de commande (3) en tant que deuxième delta d'alimentation, le réacteur (21, 22, 23) demandant une cible d'alimentation plus élevée.

19. Procédé selon l'une quelconque des revendications 16 à 18, **caractérisé en ce que** les objectifs d'alimentation (311, 321, 331) de tous les réacteurs (21, 22, 23) demandant une cible d'alimentation plus élevée (311, 321, 331) sont augmentés de telle sorte que la somme de tous les objectifs d'alimentation (311, 321, 331) soit égale à la cible d'alimentation totale.

20. Procédé selon l'une quelconque des revendications 16 à 19, **caractérisé en ce que** les objectifs d'alimentation (311, 321, 331) des réacteurs (21, 22, 23) demandant une cible d'alimentation plus élevé (311, 321, 331) sont augmentés uniformément.

21. Procédé selon l'une quelconque des revendications 16 à 20, **caractérisé en ce que** la cible d'alimentation (311, 321, 331) est augmentée et/ou diminuée par un pas ou un taux fixe.

22. Procédé selon l'une quelconque des revendications 16 à 21, **caractérisé en ce que** l'unité de commande (3) comprend une alimentation maximale (212) pour au moins l'un de la pluralité de réacteurs (21, 22, 23), dans lequel l'unité de commande (3) fixe la cible d'alimentation (311) du réacteur (21) à un niveau inférieur à l'alimentation maximale (212) du réacteur (21) et/ou comprend une alimentation minimale (213) pour au moins l'un de la pluralité de réacteurs (21, 22, 23), dans lequel la cible d'alimentation (311) du réacteur (21) est fixée à un niveau supérieur à l'alimentation minimale (213) du réacteur (21).

23. Procédé selon l'une quelconque des revendications 16 à 22, **caractérisé en ce que** l'au moins une variable de commande (31, 32, 33) comprend un seuil inférieur de flux d'air (315, 325, 335) et un seuil supérieur de flux d'air (314, 324, 334) et **en ce que** l'unité de commande (3) comprend une valeur totale de flux d'air, dans lequel la somme des seuils de flux d'air supérieurs (314, 324, 334) de la pluralité de réacteurs (21, 22, 23) est inférieure ou égale à la valeur totale du flux d'air, dans lequel l'unité de commande (3), pour chaque réacteur (21, 22, 23), comprend une valeur de flux d'air total,
- lit une valeur réelle du flux d'air (214, 224, 234) du réacteur respectif (21, 22, 23), compare la valeur réelle du flux d'air (214, 224, 234) avec les seuils inférieur et supérieur du flux d'air (314, 315, 324, 325, 334, 335) du réacteur (21, 22, 23) en calculant les différences,
- interprète la différence entre le seuil supérieur du flux d'air (314, 324, 334) et la valeur réelle du flux d'air (214, 224, 234) inférieure à un deuxième delta d'air (316, 326, 336) comme une demande d'augmentation des seuils du flux d'air (314, 315, 324, 325, 334, 335) et
- interprète la différence entre le seuil inférieur du flux d'air (315, 325, 335) et la valeur réelle du flux d'air (214, 224, 234) inférieure à un premier delta d'air (317, 327, 337) comme une demande de diminution des seuils du flux d'air (314, 315, 324, 325, 334, 335), et
dans lequel l'unité de commande (3) diminue les seuils de flux d'air inférieurs et/ou supérieurs (314, 315, 324, 325, 334, 335) pour ceux des réacteurs (21, 22, 23) qui ont demandé une diminution des seuils de flux d'air (314, 315, 324, 334, 335) et augmente les seuils inférieurs et/ou supérieurs du flux d'air (314, 315, 324, 334, 335) pour ceux des réacteurs (21, 22, 23) qui ont demandé une augmentation des seuils du flux d'air (314, 315, 324, 325, 334, 335) à la condition que la valeur totale du flux d'air ne soit pas dépassée.

24. Procédé selon la revendication 23, **caractérisé en ce que** la valeur totale du flux d'air dépend d'un débit maximal de gaz du système commun de post-traitement des gaz d'échappement (8) placé après la pluralité de réacteurs (21, 22, 23), dans lequel la valeur totale du flux d'air est une valeur fixe ou dépend en outre d'une valeur du flux d'oxygène des réacteurs (21, 22, 23).

25. Procédé selon la revendication 23 ou la revendication 24, **caractérisé en ce que** l'unité de commande (3) comprend une valeur maximale de flux d'air (215) pour au moins un des réacteurs (21, 22, 23), dans lequel l'unité de commande (3) fixe les seuils de flux d'air inférieurs et/ou supérieurs (314, 315) du réacteur (21) inférieurs à la valeur maximale du flux d'air (215) du réacteur (21) et/ou comprend une valeur minimale du flux d'air (216) pour au moins un des réacteurs (21, 22, 23), dans lequel l'unité de commande (3) fixe les seuils inférieurs et/ou supérieurs du flux d'air (314, 315) du réacteur (21) à une valeur supérieure à la valeur minimale du flux d'air (216) du réacteur (21).

26. Procédé selon l'une quelconque des revendications 23 à 25, **caractérisé en ce que** le seuil inférieur du flux d'air (315, 325, 335) présente une différence prédéterminée par rapport au seuil supérieur du flux d'air (314, 324, 334) pour le même réacteur (21, 22, 23) et/ou un facteur prédéterminé compris entre 0,6 et 0,95, de préférence compris entre 0,7 et 0,9, en particulier 0,8.

27. Procédé selon l'une des revendications 16 à 26, **caractérisé en ce que**, pour chacun des réacteurs (21, 22, 23), la au moins une variable de commande respective (31, 32, 33) comprend un seuil inférieur et un seuil supérieur de flux d'oxygène, dans lequel l'unité de commande (3) comprend une valeur totale de flux d'oxygène, dans lequel une somme des seuils supérieurs de flux d'oxygène de la pluralité de réacteurs (21, 22, 23) est inférieure ou égale à valeur totale de flux d'oxygène, dans l'unité de commande (3), pour chacun des réacteurs (21, 22, 23)
- lit une valeur réelle du flux d'oxygène du réacteur respectif (21, 22, 23), compare la valeur réelle du flux d'oxygène avec les seuils inférieur et supérieur du flux d'oxygène du réacteur (21, 22, 23) en calculant les différences,
- interprète la différence entre le seuil de flux d'oxygène le plus élevé et la valeur réelle du flux d'oxygène inférieure à un premier delta d'oxygène comme une demande d'augmentation des seuils de flux d'oxygène et
- interprète la différence entre le seuil inférieur du flux d'oxygène et la valeur réelle du flux d'oxygène qui est inférieure à un deuxième delta d'oxygène comme une demande de diminution des seuils du flux d'oxygène,
et dans lequel l'unité de commande (3) diminue les seuils de flux d'oxygène inférieurs et/ou supérieurs pour ceux des réacteurs (21, 22, 23) qui ont demandé des seuils de flux d'oxygène inférieurs
et augmente les seuils inférieurs et/ou supérieurs du flux d'oxygène pour ceux des réacteurs (21, 22, 23) qui ont demandé des seuils de flux d'oxygène plus élevés à la condition que la valeur totale du flux d'oxygène ne soit pas dépassée.

28. Procédé selon la revendication 27, **caractérisé en ce que** l'unité de commande (3) comprend une valeur maximale du flux d'oxygène pour au moins un des réacteurs (21, 22, 23) ou lit la valeur minimale du flux d'oxygène de ce réacteur (21, 22, 23),
dans lequel l'unité de commande (3) fixe les seuils inférieurs et/ou supérieurs du flux d'oxygène du réacteur (21, 22, 23) à un niveau inférieur au flux d'oxygène maximal du réacteur (21, 22, 23), et/ou
**en ce que** l'unité de commande (3) comprend un flux d'oxygène minimum pour au moins un des réacteurs (21, 22, 23) ou lit la valeur du flux d'oxygène minimum de ce réacteur (21, 22, 23), dans lequel l'unité de commande (3) fixe des seuils de flux d'oxygène inférieurs et/ou supérieurs du réacteur (21, 22, 23) pour qu'ils soient plus élevés que le flux d'oxygène minimum du réacteur (21, 22, 23).
